# EUROPÄISCHE PATENTSCHRIFT

(11) **EP 1 175 426 B1**
(45) Veröffentlichungstag und Bekanntmachung des Hinweises auf die Patenterteilung: **28.05.2003**
(21) Anmeldenummer: 00926900.2
(22) Anmeldetag: 13.04.2000
(51) Int. Cl.: C07F 9/50, C07C 45/50, C07F 15/00, C07F 9/6553, C07F 17/02, C07B 53/00

(54) **BIDENTATE ORGANOPHOSPHORLIGANDEN UND IHRE VERWENDUNG**
BIDENTATE ORGANOPHOSPHOROUS LIGANDS AND THEIR USE
LIGANDS ORGANOPHOSPHORES BIDENTES ET LEUR UTILISATION

(30) Priorität: 23.04.1999 DE 19918420
(43) Veröffentlichungstag der Anmeldung: 30.01.2002
(73) Patentinhaber: Degussa AG, 40474 Düsseldorf (DE)
(72) Erfinder: BOSCH, Boris, D-60487 Frankfurt (DE); TRAUTHWEIN, Harald, D-80636 München (DE); RIERMEIER, Thomas, D-65439 Flörsheim (DE); DINGERDISSEN, Uwe, D-64342 Seeheim-Jugenheim (DE); MONSEES, Axel, D-65795 Hattersheim (DE)
(86) Internationale Anmeldenummer: EP0003303
(87) Internationale Veröffentlichungsnummer: WO00064914

(56) Entgegenhaltungen:
- EP-A- 0 614 901
- US-A- 4 595 753
- SHIRAKAWA E ET AL: "An Iminophosphine-Palladium Catalyst for Cross-Coupling of Aryl Halides with Organostannanes" TETRAHEDRON LETTERS,NL,ELSEVIER SCIENCE PUBLISHERS, AMSTERDAM, Bd. 38, Nr. 21, 26. Mai 1997 (1997-05-26), Seiten 3759-3762, XP004064030 ISSN: 0040-4039
- KAMIKAWA K: "Palladium-catalyzed amination of aryl bromides utilizing arene-chromium complexes as ligands" JOURNAL OF ORGANIC CHEMISTRY,US,AMERICAN CHEMICAL SOCIETY. EASTON, Bd. 63, Nr. 23, 13. November 1998 (1998-11-13), Seiten 8407-8410, XP002106500 ISSN: 0022-3263

## Beschreibung

Trisubstituierte Organophosphorverbindungen haben große Bedeutung als Liganden in der homogenen Katalyse. Durch Variation der Substituenten am Phosphor in solchen Verbindungen lassen sich die elektronischen und sterischen Eigenschaften des Phosphorliganden gezielt beeinflussen, so daß Selektivität und Aktivität bei homogen-katalytischen Prozessen gesteuert werden können. Enantiomerenangereicherte chirale Liganden werden in der asymmetrischen Synthese bzw. asymmetrischen Katalyse eingesetzt, hier kommt es wesentlich darauf an, daß die elektronischen *und* die stereochemischen Eigenschaften des Liganden auf das jeweilige Katalyseproblem optimal abgestimmt sind. Es besteht ein großer Bedarf an chiralen Liganden, die sich stereochemisch oder/und elektronisch unterscheiden, um den für eine bestimmte asymmetrische Katalyse optimalen 'maßgeschneiderten' Liganden aufzufinden. Im Idealfall hat man daher ein vielseitig modifizierbares, chirales Ligand-Grundgerüst zur Verfügung, das sich in bezug auf seine sterischen und elektronischen Eigenschaften in breitem Rahmen variieren läßt.

Die Strukturvielfalt der bisher bekannten Phosphorliganden ist sehr groß. Die Gliederung dieser Liganden kann beispielsweise nach Stoffklassen erfolgen, und Beispiele für solche Stoffklassen sind Trialkyl- und Triarylphosphine, Phosphite, Phosphinite, Phosphonite, Aminophosphane usw. Diese Einteilung nach Stoffklassen ist insbesondere nützlich, um die elektronischen Eigenschaften der Liganden zu beschreiben.

Darüber hinaus ist eine Klassifizierung von Phosphorliganden nach ihren Symmetrieeigenschaften oder nach der Zähnigkeit der Liganden möglich. Diese Strukturierung trägt insbesondere der Stabilität, Aktivität und (potentiellen) Stereoselektivität von Metallkomplexen mit Phosphorliganden als Katalysatorvorstufen/Katalysatoren Rechnung. Neben den weit verbreiteten C₂symmetrischen bidentaten Ligandsystemen wie DUPHOS, DIOP, BINAP oder DEGUPHOS rücken unsymmetrische bidentate Organophosphorliganden immer mehr in den Fokus in der asymmetrischen Katalyse. Wichtige Beispiele sind die große Klasse der vielseitig einsetzbaren chiralen Ferrocenylphosphinliganden wie z.B. JOSIPHOS, die Aminophosphin-Phosphinitliganden wie PINDOPHOS oder DPAMPP, die besonders in der asymmetrischen Hydrierung von Olefinen erfolgreich eingesetzt werden, oder die Phosphin-Phosphit-Liganden wie BINAPHOS oder BIPHEMPHOS, die Meilensteine in der asymmetrischen Hydroformylierung von Olefinen darstellen. Ein wichtiger Aspekt des Erfolges dieser Verbindungsklassen wird der Schaffung einer besonders asymmetrischen Umgebung des Metallzentrums durch diese Ligandsysteme zugeschrieben. Um eine solche Umgebung für eine effektive Übertragung der Chiralität zu nutzen, ist es vorteilhaft, die Flexibilität des Ligandsystems als inhärente Limitierung der asymmetrischen Induktion zu kontrollieren (Catalytic Asymmetric Synthesis, Ed.: I. Ojima 1993; Wiley-VCH).

Die vorliegende Erfindung beschreibt neuartige, unsymmetrische, bidentate und chirale Phosphorligandsysteme, die in einzigartiger Weise die oben angeführten wichtigsten Merkmale für effektive asymmetrische Induktion in sich vereinigen. Sie schaffen sowohl eine hochasymmetrische Koordinationssphäre mit unabhängig voneinander modifizierbaren Organophosphordonoren und lassen sich einfach in ihren sterischen und elektronischen Eigenschaften über einen außergewöhnlich weiten Raum modifizieren. Sie erlauben darüber hinaus die graduelle Einstellung der Rigidität über die Veränderung der Grundstruktur des "Ligandenrückgrates". Gleichzeitig zeichnen sich die erfindungsgemäßen Verbindungen im Gegensatz zu vielen etablierten Ligandsystemen durch eine einfache synthetische Zugänglichkeit in großer Variationsbreite aus.

Diese Erfindung betrifft modular aufgebaute, unsymmetrische bidentate Organophosphorliganden der Formel (I) mit einer trivalenten Phosphinfünktionalität und einer zweiten trivalenten Phosphorgruppierung, die über ein Heteroatom an ein chirales Ligandgrundgerüst gebunden ist.

R¹R²PZC*HR³XP (YR⁴)(YR⁵) (I)

worin
- R¹-R⁵: gleich oder verschieden sind und ein Wasserstoffatom oder eine C₁-C₅₀ kohlenstoffhaltige Gruppe, wie z. B. C₁-C₂₄ Alkyl, C₂-C₂₄ Alkenyl, C₃-C₈ Cycloalkyl, C₃-C₈ Cycloalkenyl, C₆-C₁₄ Aryl, Phenyl, Naphthyl, Fluorenyl, C₂-C₁₃ Heteroaryl, wobei die Zahl der Heteroatome, insbesondere aus der Gruppe N, O, S, 1-4 betragen kann, wobei die cyclischen aliphatischen oder aromatischen Reste bevorzugt 5 bis 7 gliedrige Ringe sind und bei denen die genannten Substituenten jeweils ein- oder mehrfach substituiert sein können, diese Substituenten können dabei unabhängig voneinander Wasserstoff, C₁-C₂₀ Alkyl, C₂-C₂₀ Alkenyl, C₁-C₁₀ Haloalkyl, C₃-C₈ Cycloalkyl, C₃-C₈ Cycloalkenyl, C₂-C₉ Heteroalkyl, C₁-C₉ Heteroalkenyl, C₆-C₁₄ Aryl, Phenyl, Naphthyl, Fluorenyl, C₂-C₇ Heteroaryl, wobei die Zahl der Heteroatome, insbesondere aus der Gruppe N, O, S, 1-4 betragen kann, C₁-C₁₀ Alkoxy, C₁-C₉ Trihalomethylalkyl, Trifluormethyl, Trichlormethyl, Fluoro, Chloro, Bromo, lodo, Nitro, Hydroxy, Trifluormethylsulfonato, Oxo, Thio, Thiolato, Amino, C₁-C₈ substituierte Amino der Formen mono-, di-, tri-C₁-C₈-Alkylamino oder C₂-C₈ Alkenylamino oder mono-, di-, tri- C₆-C₈ Arylamino oder C₁-C₈-Alkyl-C₆-C₈-arylamino, Cyano, Carboxyl, Carboxylato der Form COOR⁸ wobei R⁸ ein einwertiges Kation oder ein C₁-C₈ Alkyl darstellt, C₁-C₈-Acyloxy, Sulfinato, Sulfonato der Form SO₃R⁸, Phosphato der Form PO₃H₂, PO₃HR⁸, PO₃ R⁸₂, Tri- C₁-C₆ Alkylsilyl, sein, und wobei zwei dieser Substituenten auch verbrückt sein können, und worin R¹ und R² bzw. R⁴ und R⁵ so miteinander verbrückt sein können, daß eine 4-8 gliedrige cyclische Verbindung vorliegt,
- X: -O-, -S- oder -NR⁶-
- R⁶: einem der für R¹-R⁵ definierten Reste entspricht,
- Y: eine direkte Phosphor-Kohlenstoffbindung, -O-, oder -NR⁷- darstellt,
wobei
- R⁷: einem der für R¹-R⁵ definierten Reste entspricht,
- Z: miteinander durch Einfach-oder Doppelbindung verbundene ein bis sechs Kohlenstoffatome sind, die die Phosphineinheit PR¹R² mit dem Kohlenstoffzentrum C* verknüpfen, wobei Z Teil eines gegebenenfalls Heteroatome, bevorzugt Stickstoff, Sauerstoff, oder Schwefel, enthaltenden aliphatischen, cycloaliphatischen, olefinischen, cycloolefinischen Systems, eines Metallocens, insbesondere 1,1' oder 1,2 disubstituierten Ferrocens, oder besonders bevorzugt eines aromatischen oder heteroaromatischen Ringsystems, das gegebenenfalls mit Substituenten wie für R¹-R⁵ angegeben oder direkt mit C₁-C₁₀-Alkoxyl C₁-C₉-Trihalomethylalkyl, Trifluormethyl, Trichlormethyl, Fluoro, Chloro, Bromo, lodo, Nitro, Hydroxy, Trifluormethylsulfonato, Oxo, Thio, Thiolato, Amino, C₁-C₈-substituierte Amino der Formen NH₂, NH-Alkyl-C₁-C₈, NH-Aryl-C₅-C₆, N-Alkyl₂-C₁-C₈, N-Aryl₂-C₅-C₆, N-Alkyl₃-C₁-C₈⁺, N-Aryl₃-C₅-C₆⁺, Cyano, Carboxylato der Formen COOH und COO R⁸ wobei R⁸ entweder ein einwertiges Kation oder C₁-C₈-Alkyl darstellt, C₁-C₆-Acyloxy, Sulfinato, Sulfonato der Formen SO₃H und SO₃ R⁸ wobei R⁸ entweder ein einwertiges Kation, C₁-C₈-Alkyl oder C₆-Aryl darstellt, Phosphonato, Phosphato der Formen PO₃H₂, PO₃HR⁸ und PO₃ R⁸₂ wobei R⁸ entweder ein einwertiges Kation, C₁-C₈-Alkyl oder C₆-Aryl darstellt, C₁-C₆-Trialkylsilyl, CONH₂, NHCO-Alkyl-(C₁-C₄), CON(Alkyl-(C₁-C₈))₂, CO-Alkyl-(C₁-C₈), COO-Alkyl-(C₁-C₈), CO-Alkenyl-(C₁-C₈), NHCOO-Alkyl-(C₁-C₄), CO-Aryl-(C₆-C₁₀), COO-Aryl-(C₆-C₁₀), CHCH-COO-Alkyl-(C₁-C₈), CHCHCOOH ein oder mehrfach substituiert sein können und
- P: ein dreiwertiger Phosphor ist.

Die Erfindung betrifft ferner Komplexverbindungen, die ein derartiges, chirales Ligandsystem der Formel (I) mit mindestens einem Metall enthalten.

### Bevorzugt steht

R¹-R⁵ unabhängig voneinander für ein C₁-C₂₀ Alkyl, Alkenyl, Haloalkyl, Cycloalkyl, Cycloalkenyl, Aryl, Heteroaryl, bei denen diese Reste jeweils ein- oder mehrfach substituiert sein können, diese Substituenten können dabei C₁-C₂₀ Alkyl, C₂-C₂₀ Alkenyl, C₁-C₁₀ Haloalkyl, C₃-C₈ Cycloalkyl, C₃-C₈ Cycloalkenyl, C₆-C₁₄ Aryl, C₂-C₇ Heteroaryl, C₁-C₁₀ Alkoxy, Halogeno, Nitro, Hydroxy, Oxo, Thio, Thiolato, Amino, substituierte Amino, Cyano, Sulfonato, Tri- C₁-C₆ Alkylsilyl sein und wobei zwei dieser Substituenten auch verbrückt sein können, Bevorzugt sind Verbindungen, in denen Z Teil eines Ringsystems ist. R3 ist nicht Teil dieses Ringsystems. Bevorzugt sind drei-neungliedrige Ringsysteme. Besonders bevorzugt sind fünf-siebengliedrige Ringsysteme. Das Ringsystem kann ein bis vier Heteroatome enthalten, bevorzugt ein bis zwei. Bevorzugt sind dabei O, N und S. Der Schwefel S kann in verschiedenen Oxidationsformen vorliegen, bevorzugt neben -S- ist -SO₂-. Der Stickstoff des Ringsystems kann als NR, NR₂⁺, NRH⁺, NC(O)R, NSO₂R, NP(O)R₂ vorliegen. Wobei R für Alkyl oder Aryl steht. Die Ringsysteme können wie für R¹-R⁵ angegeben oder mit Alkoxy, Halogeno, Nitro, Hydroxy, Oxo, Thio, Thiolato, Amino, substituierten Amino, Cyano, Sulfonato, Phosphonato,Trialkylsilylgruppen ein oder mehrfach direkt substituiert sein, wobei die Substituenten auch untereinander verbrückt sein können.

Bevorzugte Ringsysteme sind unsubstituierte oder wie vorstehend angegeben substituierte Phenyl, Cyclopentyl, Cyclohexyl, Pyridyl, Pyrrol, Furyl, Thiophen, Tetrahydrofuran, Tetrahydrothiophen, Piperidyl, Pyrrolidinyl, Ferrocenyl, Dioxolan oder Sulfolanringe. Metallocene wie Ferrocene sollen nach dem Verständnis dieser Erfindung formal zur Gruppe der Aromaten gerechnet werden.

Vorzugsweise weist das erfindungsgemäße Ligandsystem in R¹-R⁷ Alkyl, Alkenyl, Cycloalkyl, Cycloalkenyl, Alkoxy, Trialkylsilyl oder/und Dialkylaminogruppen unabhängig voneinander auf, die jeweils 1 bis 20, insbesondere 1 bis 6 Kohlenstoffatome enthalten.

Aus der Gruppe der Alkylsubstituenten seien bevorzugt genannt Methyl, Ethyl, n-Propyl, 1-Methylethyl, n-Butyl, 1-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, n-Heptyl, n-Octyl, n-Nonyl, n-Decyl.

Unter den cyclischen Alkylsubstituenten sind besonders bevorzugt substituierte und unsubstituierte Cyclopentyl, Cyclohexyl, Cycloheptyl.

Als Alkenylreste seien bevorzugt Vinyl, Propenyl, Isopropenyl, 1-Butenyl, 2-Butenyl, 1-Pentenyl, 2-Pentenyl, 2-Methyl-1-butenyl, 2-Methyl-2-butenyl, 3-Methyl-1-butenyl, 1-Hexenyl, 1-Heptenyl, 2-Heptenyl, 1-Octenyl oder 2-Octenyl genannt. Unter den cyclischen Alkenylsubstituenten sind besonders bevorzugt Cyclopentenyl, Cyclohexenyl, Cycloheptenyl und Norbornyl.

Unter Arylsubstituenten in R¹-R⁷ sind besonders bevorzugt 2-Alkylphenyl, 3-Alkylphenyl, 4-Alkylphenyl, 2,6-Dialkylphenyl, 3,5-Dialkylphenyl, 3,4,5-Trialkylphenyl, 2-Alkoxyphenyl, 3-Alkoxyphenyl, 4-Alkoxyphenyl, 2,6-Dialkoxylphenyl, 3,5-Dialkoxyphenyl, 3,4,5-Trialkoxyphenyl, 3,5-Dialkyl-4-Alkoxyphenyl, 3,5-Dialkyl-4-dialkylaminophenyl, 4-Dialkylamino, wobei die vorgenannten Alkyl- und Alkoxygruppen jeweils vorzugsweise 1 bis 6 Kohlenstoffatome enthalten, 3,5-Trifluormethyl, 4-Trifluormethyl, 2-Sulfonyl, 3-Sulfonyl, 4-Sulfonyl, ein bis vierfach halogenierte Phenyl und Naphtyl. Bevorzugte Halogensubstituenten sind F, Cl und Br.

Alle Haloalkyl- oder/und Haloarylgruppen weisen vorzugsweise die allgemeinen Formeln CHal₃, CH₂CHal₃, C₂Hal₅ auf, wobei Hal insbesondere für F, Cl und Br stehen kann. Besonders bevorzugt sind Haloalkyl- oder/und Haloarylgruppen der Formeln CF₃, CH₂CF₃, C₂F₅.

Bevorzugt sind solche Systeme, bei denen, falls X gleich NR⁶ ist, Y eine direkte Phosphor-Kohlenstoffbindung darstellt, und falls X gleich O ist, Y entweder eine direkte Phosphor-Kohlenstoffbindung darstellt oder -O- ist. Schließlich sind Ligandsysteme der Formel I als optisch aktive Ligandsysteme bevorzugt, bei denen ein Enantiomer angereichert ist. Besonders bevorzugt sind Ligandsysteme, bei denen die Enantiomerenanreicherung 90 %, insbesondere 99 % übersteigt.

Für die Synthese dieser Verbindungen der Formel (I) stehen mehrere Wege zur Verfügung:
Die Auswahl eines Reaktionsweges ist abhängig von der Verfügbarkeit der entsprechenden Edukte und vom gewünschten Substitutionsmuster. Nachfolgend soll eine illustrierende Auswahl anhand von Beispielen von Synthesewegen die Vielfalt der mit dem hier vorgestellten erfindungsgemäßen Verfahren erhältlichen Ligandsysteme aufzeigen, ohne alternative Synthesewege und andere Substitutionsmuster und Ligandgrundgerüste des Typs (I) einschränkend auszuschließen. In der nachfolgenden Beschreibung bezeichnen die Substituentenplatzhalter R und R' allgemein verschiedene in der obigen Definition mit R1 - R5 genauer benannte Substituenten. Der Übersichtlichkeit halber wurden in den Illustrationen einfache Ligandgrundgerüste wie Phenyl oder Ethylen ausgewählt, ohne damit Einschränkungen oder Limitierungen zu implizieren.

Nachfolgend wird das Syntheseprinzip für sechs Basisstrukturen des Typs (I) beschrieben.
Durch die Variation prinzipiell bekannter Verfahren sind Phosphinalkohole und Phosphinamine vom Typ III, V; VII, VIII, X und XI (Schemen 2-4) in wenigen Syntheseschritten erhältlich. Zur Illustration sollen diese Wege kurz beschrieben werden.
Chirale Alkohole vom Typ II (Schema 1) (erhältlich durch verschiedene asymmetrische Reduktionsverfahren. Hydrierung:, z. B. Noyori et al. Tetrahedron Letters, 1991, 32, 4163; J. Am. Chem. Soc. 1998, 120, 13529; Hydridreduktion: z. B. Corey et al. J. Am. Chem. Soc. 1987, 109, 5551) können nach Einführung einer geeigneten Alkoholschutzgruppe SG (z. B. Methoxymethylen, Fuji et al., Synthesis, 1975, 276; Tetrahydropyranyl, Weiss et al., J. Org. Chem. 1979, 44, 1438) metalliert und nachfolgend mit dem gewünschten Chlorophosphin gequencht werden (Brunner et al. J. Chem. Soc., Perkin Trans. 1, 1996). Nach Abspaltung der Schutzgruppe SG unter aciden Bedingungen erhält man den gewünschten chiralen Phosphinoalkohol, in Abbildung 1 illustriert durch Struktur III.

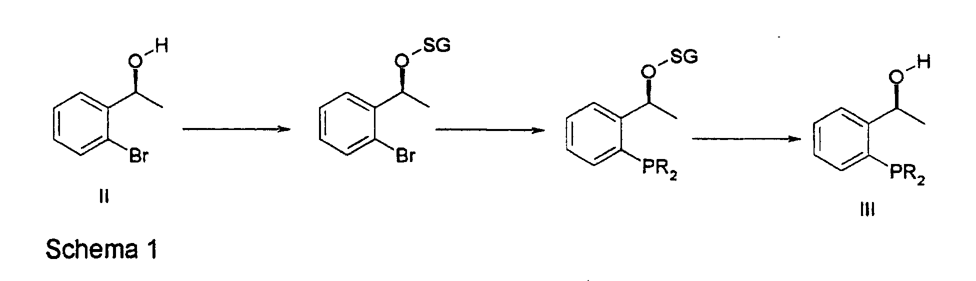

Die entsprechenden chiralen Aminophosphine vom Typ V (Schema 2) sind über eine ähnliche Reaktionssequenz zugänglich. Ausgehend von chiralen Aminen vom Typ IV (nach prinzipiell bekannten Verfahren erhältlich durch verschiedene asymmetrische Reduktionsverfahren. (Hydrierung: Burk et. al. J. Org. Chem. 1998, 63, 6084; J. Am. Chem. Soc. 1996, 118, 5142; Hydridtransfer: Mukaiyama et al. Chem. Lett. 1997, 493; enzymatisch: Santaniello et al. Chem. Rev. 1992, 92, 1071)) wird nach N-Alkylierung und Schutz der NH-Funktionalität wie oben phosphiniert und nachfolgend das sekundäre Aminophosphin V freigesetzt.

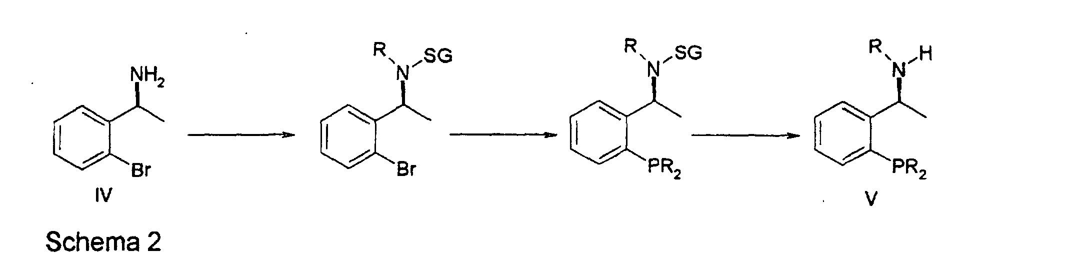

Amino- und Hydroxyphosphine mit Ferrocenylbrücke (VII und VIII) (Schema 3) sind ebenfalls durch Modifikation bekannter Synthesestrategien zugänglich. Ausgehend von enantiomerenreinem Aminoferrocenylphosphin (VI) (Synthese z. B.: Hayashi und Kumada Bull. Chem. Soc. Jpn., 1980, 53, 1138) lassen sich unter Retention der Konfiguration durch verschiedene nucleophile Substitutionsreaktionen die entsprechenden sek. Hydroxyferrocenylphosphine (VII) oder Aminoferrocenylphosphine (VIII) erhalten. (analog zu Ugi et al. J. Org. Chem. 37, 3052 und Hayashi und Kumada, Bull. Chem. Soc. Jpn., 1980, 53, 1138).

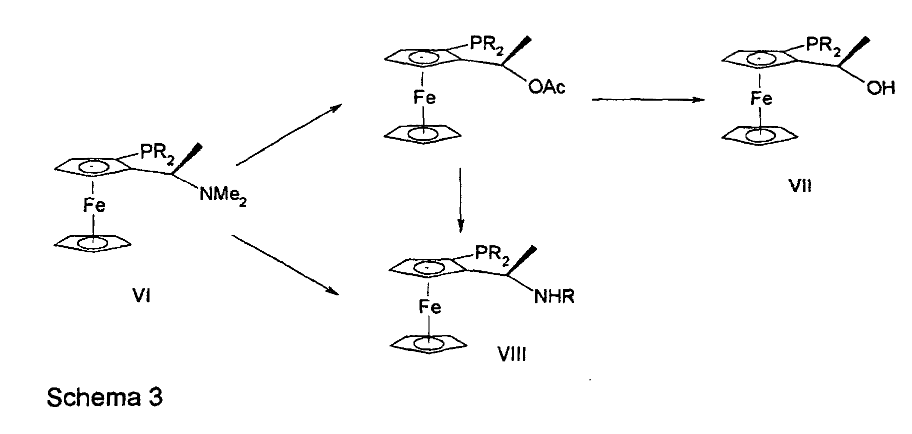

Borangeschützte Hydroxyphosphine mit Alkylbrücke (X) (Schema 4) können analog zu Brunner et al. (Tetrahedron Lett. 1998, 54, 10317) durch enantioselektive Diorganozinkaddition an Phosphinylaldehyde (IX) dargestellt. Entsprechende Aminophosphine (XI) können aus den Phosphinylaldehyden (IX) durch reduktive Aminierung mit primären Aminen und nachfolgende Racematspatung erhalten werden.

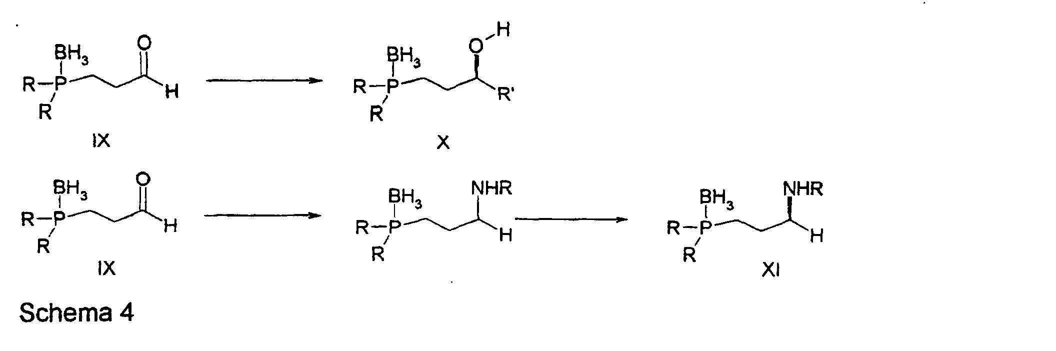

Erfindungsgemäß gelingt die Umwandlung der Amino- und Hydroxyphosphine III, V, VII, VIII in die neuartigen Ligandsysteme XII-XVII vom Typ der Formel (I) (Schema 5) in einem Schritt durch Addition von Chlorphosphinen oder Chlorophosphiten in Gegenwart stöchiometrischer Mengen einer Base (Vorschriften für Substitutionsreaktionen dieses Typs: z. B. Reetz et al. Angew. Chem. 1999, 111, 134; RajanBabu et al., J. Org. Chem. 1997, 62, 6012; Onuma et al. Bull. Chem. Soc. Jpn. 1980, 53, 2012). Für die Verbindungen des Typs X und XI ist die nachgeschaltete Entfernung der Boranschutzgruppe, z. B. mit Aminen notwendig.

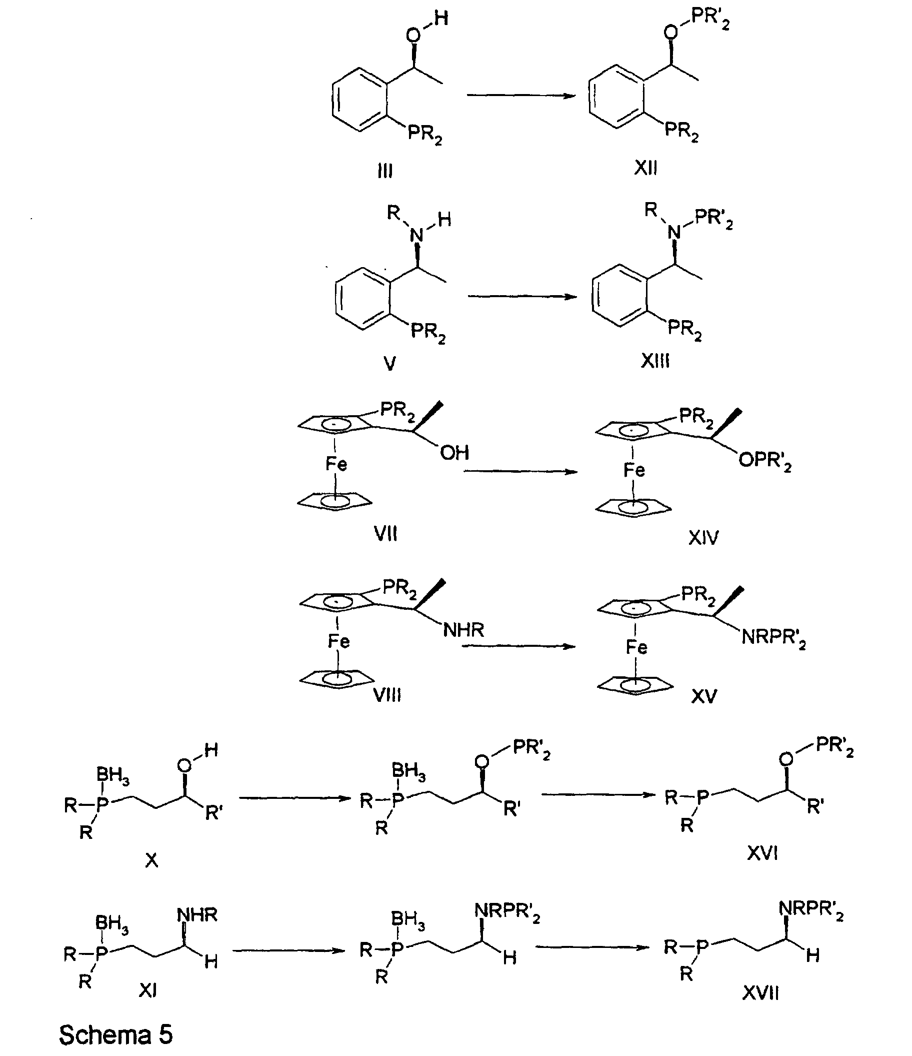

Erfindungsgemäß können Liganden des Typs 1, bei denen die Substituenten R1, R2, R4 und R5 gleich sind, alternativ in einem Eintopfverfahren ausgehend von den entsprechenden Haloalkoholen vom Typ II durch Umsetzung mit 2 Äquivalenten einer starken Base (z.B. tert.Butyllithium) und nachfolgender Reaktion mit 2 Äquivalenten des entsprechenden Chlorphosphanes dargestellt werden (Schema 6).

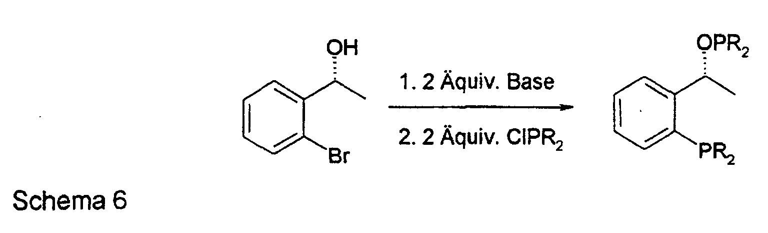

Die Verbindungen der allgemeinen Formel (I) können als Liganden an Metallen in asymmetrischen, Metall-katalysierten Reaktionen (wie z.B. Hydrierung, der Hydroformylierung, der Umlagerung, der allylischen Alkylierung, der Cyclopropanierung, Hydrosilylierung, Hydridübertragungen, Hydroborierungen, Hydrocyanierungen, Hydrocarboxylierungen, Aldol Reaktionen oder Heck-Reaktion) sowie bei Polymerisationen eingesetzt werden. Sie sind insbesondere für asymmetrische Reaktionen gut geeignet.

Geeignete Komplexverbindungen, insbesondere der allgemeinen Formel (XVIII), enthalten erfindungsgemäße Verbindungen der Formel (I) als Liganden.

[MₓPₘLₙS_{q}]Aᵣ (XVIII)

wobei in der allgemeinen Formel (XVIII) M ein Metallzentrum, bevorzugt ein Übergangsmetallzentrum, L gleiche oder verschiedene koordinierende organische oder anorganische Liganden und P erfindungsgemäße bidentate Organophosphorliganden der Formel (I) darstellen, S koordinierende Lösungsmittelmoleküle und A Äquivalente aus nicht koordinierenden Anionen repräsentiert, wobei x und m ganzen Zahlen größer oder gleich 1, n, q und r ganzen Zahlen größer oder gleich 0 sind.

Die Summe m + n + q wird durch die an den Metallzentren zur Verfügung stehenden Koordinationszentren nach oben begrenzt, wobei nicht alle Koordinationsstellen besetzt sein müssen. Bevorzugt sind Komplexverbindungen mit oktaedrischer, pseudo-oktaedrischer, tetraedrischer, pseudo-tetraedrischer, quadratisch-planarer Koordinationssphäre, die auch verzerrt sein kann, um das jeweilige Übergangsmetallzentrum. Die Summe m + n + q ist in solchen Komplexverbindungen kleiner oder gleich 6x.

Die erfindungsgemäßen Komplexverbindungen enthalten mindestens ein Metallatom oder -ion, vorzugsweise ein Übergangsmetallatom oder -ion, insbesondere aus Palladium, Platin, Rhodium, Ruthenium, Osmium, Iridium, Kobalt, Nickel, oder/und Kupfer.

Bevorzugt sind Komplexverbindungen mit weniger als vier Metallzentren, besonders bevorzugt solche mit ein oder zwei Metallzentren. Die Metallzentren können dabei mit verschiedenen Metallatomen und/oder -ionen besetzt sein.

Bevorzugte Liganden L solcher Komplexverbindungen sind Halogenid, besonders Cl, Br und I, Dien, besonders Cyclooctadien, Norbornadien, Olefin, besonders Ethylen und Cycloocten, Acetato, Trifluoracetato, Acetylacetonato, Allyl, Methallyl, Alkyl, besonders Methyl und Ethyl, Nitril, besonders Acetonitril und Benzonitril, sowie Carbonyl und Hydrido Liganden.

Bevorzugte koordinierende Lösungsmittel S sind Amine, besonders Triethylamin, Alkohole, besonders Methanol und Aromaten, besonders Benzol und Cumol.

Bevorzugte nichtkoordinierende Anionen A sind Trifluoracetat, Trifluormethansulfonat, BF₄; ClO₄, PF₆, SbF₆, und BAr₄.

In den einzelnen Komplexverbindungen können dabei unterschiedliche Moleküle, Atome oder Ionen der einzelnen Bestandteile M, P, L, S und A enthalten sein.

Bevorzugt unter den ionisch aufgebauten Komplexverbindungen sind Verbindungen des Typs [RhP(Dien)]⁺A⁻, wobei P einen erfindungsgemäßen Liganden der Formel (I) repräsentiert.

Die Herstellung dieser Metall-Ligand-Komplexverbindungen kann in situ durch Reaktion eines Metallsalzes oder eines entsprechenden Vorkomplexes mit den Liganden der allgemeinen Formel (I) erfolgen. Darüber hinaus kann eine Metall-Ligand-Komplexverbindung durch Reaktion eines Metallsalzes oder eines entsprechenden Vorkomplexes mit den Liganden der allgemeinen Formel (I) und anschließende Isolierung gewonnen werden.

Beispiele für die Metallsalze sind Metallchloride, -bromide, -iodide, -cyanide, -nitrate, -acetate, -acetylacetonate, -hexafluoracetylacetonate, tetrafluoroborate, -perfluoracetate oder -triflate, insbesondere des Palladium, Platins, Rhodium, Ruthenium, Osmium, Iridium, Kobalts, Nickels oder/und des Kupfers.

Beispiele für die Vorkomplexe sind:
Cyclooctadienpalladiumchlorid, Cyclooctadienpalladiumiodid, 1,5-Hexadienpalladiumchlorid, 1,5-Hexadienpalladiumiodid, Bis(dibenzylidenaceton)palladium, Bis(acetonitril)palladium(II)chlorid, , Bis(acetonitril)palladium(II)bromid, Bis(benzonitril)palladium(II)chlorid, Bis(benzonitril)palladium(II)bromid, Bis(benzonitril)palladium(II)iodid, Bis(allyl)palladium, Bis(methallyl)palladium, Allylpalladiumchlorid-Dimer, Methallylpalladiumchlorid-Dimer, Tetramethylethylendiaminpalladiumdichlorid, Tetramethylethylendiaminpalladiumdibromid, Tetramethylethylendiaminpalladiumdiiodid, Tetramethylethylendiaminpalladiumdimethyl, Cyclooctadienplatinchlorid, Cyclooctadienplatiniodid, 1,5-Hexadienplatinchlorid, 1,5-Hexadienplatiniodid, Bis(cyclooctadien)platin, Kalium(ethylentrichloroplatinat), Cyclooctadienrhodium(I)chlorid-Dimer, Norbomadienrhodium(I)chlorid-Dimer, 1,5-Hexadienrhodium(I)chlorid-Dimer, Tris(triphenylphosphan)rhodium(I)chlorid, Hydridocarbonyltris(triphenylphosphan)rhodium(I)chlorid, Bis(cyclooctadien)rhodium(I)perchlorat, Bis(cyclooctadien)rhodium(I)tetrafluorborat, Bis(cyclooctadien)rhodium(I)triflat, Bis(acetonitrilcyclooctadien)rhodium(I)perchlorat, Bis(acetonitrilcyclooctadien)rhodium(I)tetrafluorborat, Bis(acetonitrilcyclooctadien)rhodium(I)triflat, Cyclopentadienrhodium(III)chlorid-Dimer, Pentamethylcyclopentadienrhodium(III)chlorid-Dimer, (cyclooctadien)Ru(η³-allyl)₂, ((cyclooctadien)Ru)₂(acetat)₄, ((Cyclooctadien)Ru)₂(trifluoracetat)₄, RuCl₂(Aren)-Dimer, Tris(triphenylphosphan)ruthenium(ll)chlorid, Cyclooctadienruthenium(II)chlorid, OsCl₂(Aren)-Dimer, Cyclooctadieniridium(I)chlorid-Dimer, Bis(cycloocten)iridium(I)chlorid-Dimer,
Bis(cyclooctadien)nickel, (Cyclododecatrien)nickel, Tris(norbornen)nickel, Nickeltetracarbonyl, Nickel(II)acetylacetonat,
(Aren)kupfertriflat, (Aren)kupferperchlorat, (Aren)kupfertrifluoracetat, Kobaltcarbonyl.

Die Komplexverbindungen auf Basis von ein oder mehreren Metallen der metallischen Elemente, insbesondere aus der Gruppe von Ru, Co, Rh, Ir, Ni, Pd, Pt, Cu, können bereits Katalysatoren sein oder zur Herstellung von Katalysatoren auf Basis eines oder mehrerer Metalle der metallischen Elemente, insbesondere aus der Gruppe von Ru, Co, Rh, Ir, Ni, Pd, Pt, Cu verwendet werden. Alle diese Komplexverbindungen sind geeignet in der Hydrierung, Hydroformylierung, Umlagerung, allylischen Alkylierung, Cyclopropanierung, Hydrosilylierung, Hydridübertragungsreaktionen, Hydroborierungen, Hydrocyanierungen, Hydrocarboxylierungen, Aldol Reaktionen oder Heck-Reaktion. Besonders geeignet sind die erfindungsgemäßen Komplexe bei der asymmetrischen Hydrierung von C=C-, C=O- oder C=N-Bindungen, in denen sie hohe Aktivitäten und Selektivitäten aufweisen und in der asymmetrischen Hydroformylierung. Insbesondere erweist es sich hier als vorteilhaft, daß sich die Liganden der allgemeinen Formel (I) durch ihre einfache, breite Abwandelbarkeit sterisch und elektronisch sehr gut auf das jeweilige Substrat und die katalytische Reaktion abstimmen lassen.

Entsprechende Katalysatoren enthalten mindestens eine der erfindungsgemäßen Komplexverbindungen.

### Beispiele

### Allgemeines

Reaktionen luftempfindlicher Verbindungen wurden in einer argongefüllten Glove-Box oder in Standard Schlenkrohren durchgeführt. Lösungsmittel Tetrahydrofuran (THF), Diethylether und Dichlormethan wurden entgast und mittels einer Lösungsmitteltrocknungsanlage (Innovative Technologies) durch Filtration durch eine mit aktiviertem Aluminiumoxid gefüllte Säule absolutiert, Toluol und Pentan wurden zusätzlich durch eine mit einem Kupferkatalysator gefüllte Säule von Sauerstoff befreit.

Die folgenden Beispiele dienen zur Erläuterung der Erfindung. Sie sollen in keiner Weise eine Beschränkung darstellen.

### Synthese chiraler Alkohole

Exemplarisch zeigen die nachfolgenden Synthesevorschriften die Möglichkeiten der chiralen Reduktion von aromatischen Ketonen.

### Beispiel 1: Herstellung von (R)-2-Brom-phenylethan-1-ol (Schema7)

Der allgemeinen Vorschriften von Noyori et al. folgend wird eine Lösung von Bromacetophenon (78.5 mmol) und [Ru(R-BINAP)Cl₂] (0.079 mmol) in 30 ml Methanol wurde bei 70°C und 35 bar H₂ für 3 h gerührt. Das Lösungsmittel wird im Vakuum entfernt und das Rohprodukt bei 130-140°C und 2-3 bar kugelrohrdestilliert. Das farblose Öl wird aus Pentan bei -20°C kristallisiert .
Ausbeute: 76% ; >99 % ee.

¹H-NMR (CDCl₃):
δ = 7.58 (dd, 1H, Ar), 7.52 (dd, 1H, Ar), 7.35 (dd, 1H, Ar), 7.05 (m, 1H, Ar), 5.25 (q, 1H, *J* = 6.0 Hz, CHOH), 1.96 (s, br, 1H, OH), 1.49 (d, 3H, *J* = 6.0 Hz, CH₃) ppm.

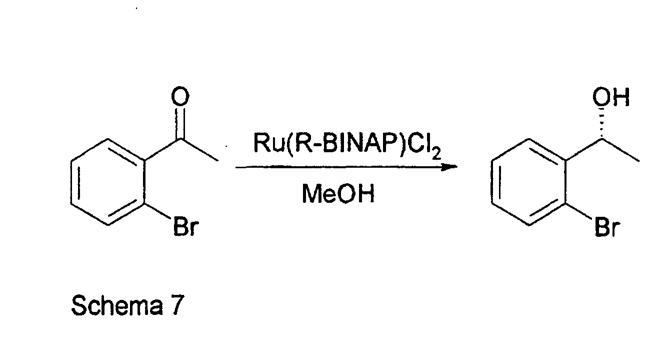

### Beispiel 2: Herstellung von (R)-2,5-Dimethyl-4-brom-3-(ethan-1-ol)thiophen (Schema 8)

3-Acetyl-4-brom-2,5-dimethylthiophen (78.5 mmol) wurde unter Verwendung von Ipc₂BCl in Tetrahydrofuran nach der allgemeinen Vorschrift von Brown et al. reduziert (J. Org. Chem. 1989, 54, 4504). 71 % Ausbeute (e.e. 72 %).

¹H-NMR (CDCl₃): δ = 5.07 (dq, CHOH), 2.47 (s, CH₃), 2.30 (s, CH₃), 1.52 (d, CH₃)

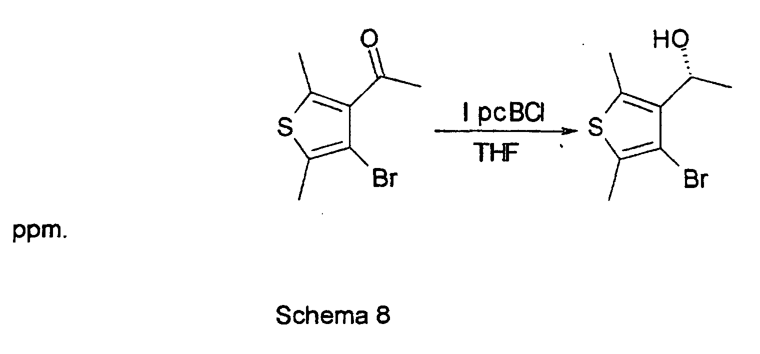

### Beispiel 3: Allgemeine Arbeitsvorschrift zur Synthese racemischer Alkohole

Das entsprechende Keton wird in Methanol gelöst und zu einer methanolischen Suspension von 2 Äquivalenten Natriumborhydrid getropft und 24 h bei Raumtemperatur gerührt. Die Reaktionsmischung wird auf kalte gesättigte Ammoniumchloridlösung gegossen und das Methanol im Vakuum entfernt. Die wässrige Phase wird dreimal mit Ethylacetat extrahiert, die vereinigten organischen Phasen über Magnesiumsulfat getrocknet und das Lösungsmittel nachfolgend im Vakuum entfernt. Die Reinigung des racemischen Rohproduktes erfolgt durch Vakuumdestillation oder Tieftemperaturkristallisation.

### Synthese der erfindungsgemäßen Liganden

Allgemeine Arbeitsvorschrift zur Synthese der erfindungsgemäßen Liganden im Eintopfverfahren

Eine Lösung des entsprechenden Alkohols (10.6 mmol) (Beispiele siehe Schema 9) in 40ml Tetrahydrofuran (THF) wird auf -78°C gekühlt und t-Butyllithium (25.0 mmol) über 15 min zugegeben. Die Reaktionslösung wird eine weitere Stunde bei -70°C gerührt und anschließend mit Chlordiphenylphosphin (22 mmol in 7 ml THF) versetzt. Über Nacht wird die Reaktionslösung auf Raumtemperatur erwärmt und 15 Stunden gerührt. Die Lösung wird im Vakuum auf 10 ml eingeengt und anschließend mit 10 ml Pentan versetzt. Es wird über Celite filtriert und das Lösungsmittel im Vakuum entfemt. Der Rückstand wird in Ether / Pentan (3 : 2) aufgenommen und über Aluminiumoxid (ALOX) (neutral) filtriert (Laufmittel Ether / Pentan 3 : 2). Nach dem Entfernen des Lösungsmittels bleibt ein farbloses oder hellgelbes Öl zurück, welches zum Teil nach einiger Zeit kristallisiert.

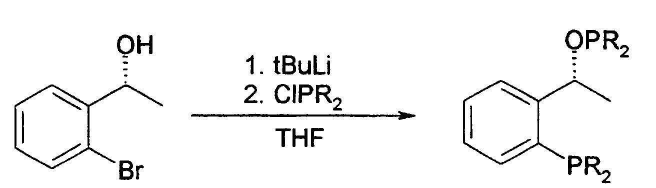

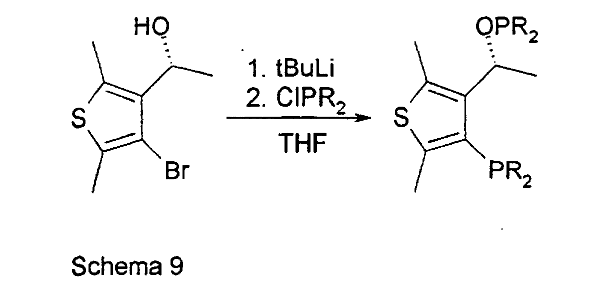

### Beispiel 4: Herstellung von (R)-2-Diphenylphosphino-1-(O-diphenylphosphinylethan-1-ol)benzol

Ausbeute: 76 %

¹H-NMR (C₆D₆): δ = 7.95-6.80 (m, 22H, Ar), 6.55 (m, 1H, Ar), 6.21 (m, 1H, Ar), 5.54 (m, 1H, CHOP), 1.58 (d, 3H, *J* = 5.8 Hz, CH₃) ppm.
³¹P-NMR(C₆D₆): δ = 109.9 (s, P-O), -17.1 (s, P-C) ppm.

### Beispiel 5: Herstellung von (R)-2-Dicyclohexylphosphino-1-(O-dicyclohexyl phosphinyl-ethan-1-ol)-benzol

Ausbeute: 66 %

¹H-NMR (C₆D₆): δ = 7.58 (dd, 1H, Ar), 7.52 (dd, 1H, Ar), 7.35 (dd, 1H, Ar), 7.05 (m, 1H, Ar), 6.27 (m, 1H, CHOP), 2.34-1.17 (m, 47H, Cy-H, CH₃) ppm.
³¹P-NMR(C₆D₆): δ = 144.8 (s, P-O), -17.6 (s, P-C) ppm.

### Beispiel 6: Herstellung von (R)-2,5-Dimethyl-4-diphenylphosphino-3-(O-diphenylphosphinyl-ethan-1-ol)thiophen

Ausbeute: 81 %

¹H-NMR (C₆D₆): δ = 7.69 - 6.97 (m, 20H, Ar), 5.81 (m, 1H, CHOP), 2.36 (s, 3H, CH₃), 2.03 (s, 3H, CH₃), 1.55 (d, 3H, *J* = 6.1 Hz, CH₃) ppm.
³¹P-NMR(C₆D₆): δ = 109.8 (s, P-O), -25.7 (s, P-C) ppm.

### Synthese der Liganden im Mehrschrittverfahren

### Beispiel 7: Herstellung von (R)-2-Brom-1-(ethan-1-methoxymethylether)benzol (MOM-Ether)(Schema 10)

Natriumhydrid (28.9 mmol) wurde mit Pentan gewaschen. Nach dem Entfernen des Pentans wurde eine Suspension in 60 ml THF hergestellt und (R)-2-Bromphenylethan-1-ol (19.2 mmol) wurde portionsweise unter Eiskühlung zugegeben. Die Reaktion wurde nach vollständiger Zugabe 60 min gerührt, anschließend über 10 min unter Eiskühlung mit Chlormethylmethylether versetzt und über Nacht gerührt Die Reaktionslösung wird vorsichtig mit gesättigter NH₄CI-Lsg. hydrolysiert. Die wäßrige Phase wird dreimal mit 100 ml Ethylacetat extrahiert, über Natriumsulfat getrocknet und das Lösungsmittel im Vakuum entfernt. Das Rohprodukt wird bei 1.6 mbar und 120 °C kugelrohrdestilliert.
Ausbeute: 86%.

¹H-NMR (CDCl₃): δ = 7.52 (m, 2H, Ar), 7.31 (m, 1H, Ar), 7.11 (m, 1H, Ar), 5.25 (q, 1H, *J* = 6.0 Hz, CHOC), 4.61 (d, 1H, *J* = 6.9 Hz, CH₂), 4.54 (d, 1H, *J* = 6.9 Hz, CH₂), 3.39 (s, 3H, OCH₃), 1.45 (d, 3H, *J* = 6.0 Hz, CH₃) ppm.

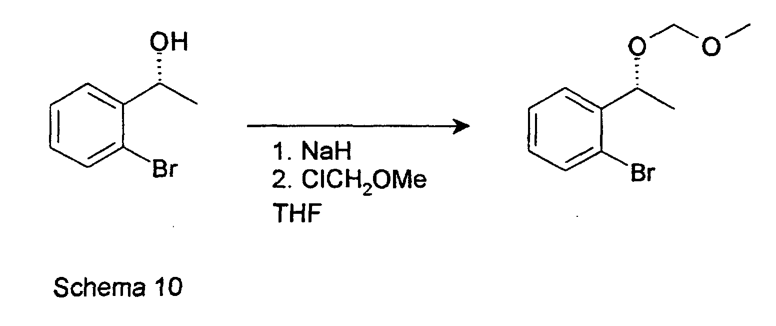

### Beispiel 8: Herstellung von (R)-2-Diphenylphosphino-1-(ethan-1-methoxymethyl ether)benzol (Schema 11)

Eine Lösung von (R)-2-Brom-1-(ethan-1-methoxymethylether)benzol (5.0 mmol) in 20 ml THF wurde auf -78°C gekühlt und 2 Äquivalente t-Butyllithium über 15 min zugegeben. Die Reaktionslösung wurde weitere 90 min bei -78°C gerührt und anschließend mit 1.1 Äquivalenten Chlordiphenylphosphin (in 5 ml THF) bei -78 °C versetzt. Nach 40 min wurde die Reaktionslösung auf Raumtemperatur erwärmt und 15 Stunden gerührt. Die Reaktionslösung wurde mit gesättigter entgaster NH₄Cl-Lsg. hydrolysiert und die wäßrige Phase dreimal mit je 30 ml Toluol extrahiert Die organischen Phasen wurden über Natriumsulfat getrocknet und das Lösungsmittel im Vakuum entfernt. Der Rückstand wird in Ether / Pentan (3 : 2) aufgenommen und über ALOX (neutral) filtriert (Laufmittel Ether / Pentan 3 : 2). Nach dem Entfernen des Lösungsmittels bleibt ein farbloses Öl zurück. Ausbeute: 1.64 g.

¹H-NMR (C₆D₆): δ = 7.62-6.80 (m, 12H, Ar), 7.31 (m, 1H, Ar), 7.11 (m, 1H, Ar), 5.50 (m, 1H, CHOC), 4.40 (d, 1H, *J* = 6.2 Hz, CH₂), 4.34 (d, 1H, *J* = 6.2 Hz, CH₂), 3.19 (s, 3H, OCH₃), 1.25 (d, 3H, *J* = 6.0 Hz, CH₃) ppm.
³¹P-NMR (C₆D₆): δ = -17.08 ppm.

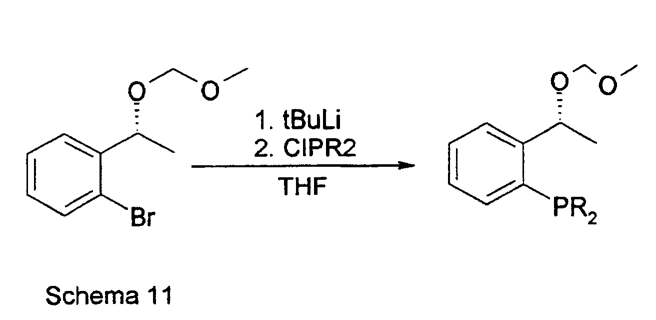

### Beispiel 9: Herstellung von (R)-2-Diphenylphosphinophenyl(ethan-1-ol) (Schema 12)

(R)-2-Diphenylphosphino-1-(ethan-1-methoxymethylether)benzol wurde in 40 ml Dichlormethan und 10 ml Methanol gelöst, mit p-Toluolsulfonsäure versetzt und 4 h bei 40 °C gerührt. Zu dieser Reaktionslösung wurden 30 ml Natriumhydrogencarbonat-Lösung gegeben und die wäßrige Phase wurde zweimal mit Dichlormethan extrahiert. Die organische Phase wurde über Magnesiumsulfat getrocknet und das Lösungsmittel im Vakuum entfernt. Das Produkt wird als Öl isoliert. Ausbeute: 53 %.

¹H-NMR (C₆D₆): δ = 7.60-7.05 (m, 13H, Ar), 6.75 (m, 1H, Ar), 5.55 (m, 1H, CHOH), 2.85 (br, 1H, OH), 1.27 (d, 3H, CH₃) ppm.
³¹P-NMR (C₆D₆): δ = -17.4 ppm.

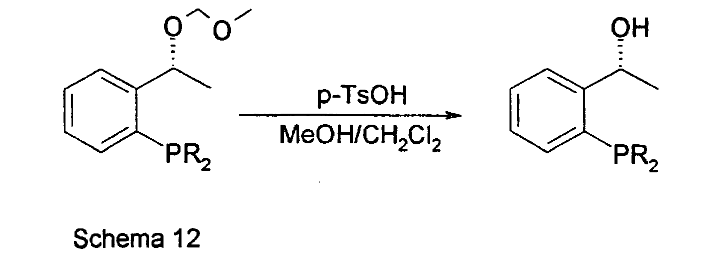

### Beispiel 10: Herstellung von (R)-2-Brom-1-(ethan-1-tetrahydropyranylether)benzol ((R)-THP-Ether) (Schema 13)

Es werden 0.92 mmol p-Toluolsulfonsäure zu einer eiskalten Lösung von 20 mmol des (R)-2-Bromphenyl-1-(ethan-1-ol) in 20 ml Dichlormethan gegeben. Über einen Zeitraum von 2 min werden 22.1 mmol 3,4-Dihydropyran zugegeben, die Lösung auf Raumtemperatur erwärmt und weitere 1.5 h gerührt. Die Reaktionslösung wird mit 20 ml Natriumhydrogencarbonat-Lösung hydrolysiert, die wäßrige Phase zweimal mit Dichlormethan extrahiert und die organische Phase mit Wasser gewaschen. Nach dem Trocknen über Magnesiumsulfat wird das Lösungsmittel im Vakuum entfernt. Das Rohprodukt wird mittels Säulenchromatographie gereinigt (Dichlormethan / Hexan 1 : 1 -> 3 : 1). Ausbeute: 64 % (Diastereomerenverhältnis 4:1)

¹H-NMR (CDCl₃): δ = 7.67-7.35 (m, 3H, Ar), 7.12 (m, 1H, Ar), 5.15 (m, 0.8H, CHO-THP), ), 5.00 (m, 0.2H, CHO-THP*), 4.75 (m, 0.2H, OCHO), 4.25 4.75 (m, 0.8H, OCHO), 3.84 (m, 0.8H, CHHO), 3.52 (m, 0.2H, CHHO), 3.39 (m, 0.8H, CHHO), 3.23 (m, 0.2H, CHHO), 1.80-1.35 (m, 6H, THP), 1.32 (d, 2.4H, *J* = 6.4 Hz, CH₃), 1.29 (d, 0.6H, *J* = 6.4 Hz, CH₃) ppm.

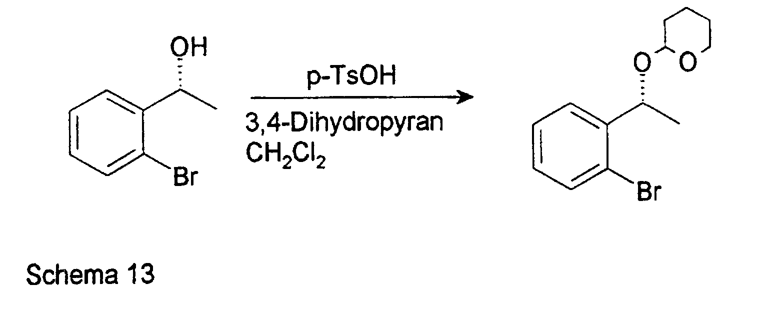

### Beispiel 11: Herstellung von (R)-2-Diphenylphosphino-1-(ethan-1-tetrahydropyranyl ether)benzol-Boran-Addukt (Schema 14)

Zu einer auf -78°C gekühlten Lösung des (R)-THP-Ethers (11.7 mmol in 34 ml THF) wird innerhalb von 10 min t-Butyllithium (23.5 mmol) gegeben und die gelbe Lösung eine Stunde bei -78°C gerührt. Zu dieser Lösung wird Chlordiphenylphosphin (11.7 mmol) gegeben und die Lösung für 30 min auf Raumtemperatur erwärmt. Die Reaktionslösung wird erneut auf -78°C gekühlt, mit 35.2 mmol Boran-THF Komplex versetzt und über Nacht auf Raumtemperatur erwärmt. Die Reaktion wird mit Eiswasser hydrolysiert und mit 90 ml tert.Butylmethylether und 65 ml 1M Salzsäure versetzt. Eine Phasentrennung setzt durch die Zugabe von 50 ml Dichlormethan ein. Die wäßrige Phase wird zweimal mit Dichlormethan extrahiert, mit ges. Natriumchlorid-Lösung gewaschen und über Magnesiumsulfat getrocknet. Nach dem Entfernen des Lösungsmittels wird das Rohprodukt als weißer Feststoff erhalten und ohne Reinigung weiter umgesetzt.
Ausbeute: 6.24 g

³¹P-NMR (CDCl₃): δ = 20.5 (s, BH₃->P-C) ppm.

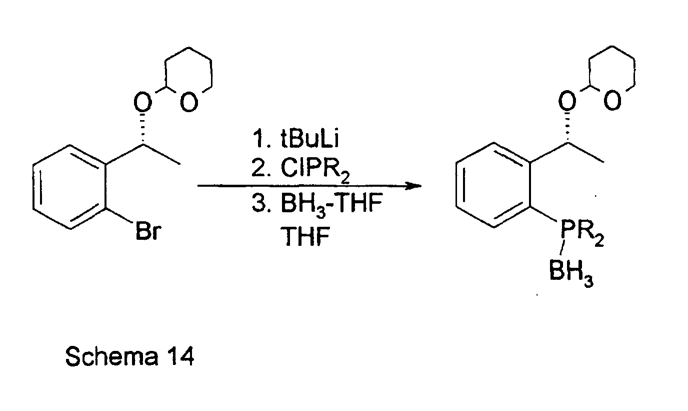

### Beispiel 12: Herstellung von (R)-2-Diphenylphosphino-1-(ethan-1-ol)benzol-Boran-Addukt (Schema 15)

Der Boran-Komplex (12 mmol) wird in 20 ml Methanol und 5 ml Dichlormethan gelöst. Zu dieser Lösung werden 0.6 mmol Toluolsulfonsäure gegeben und 6 h unter leichter Erwärmung gerührt, anschließend wird das Lösungsmittel im Vakuum entfernt. Das Rohprodukt wird mittels Flash-Chromatogrphie gereinigt (Ethylacetat /Hexan 2 : 8 -> 3 : 7). Als zweite Fraktion wurde das Produkt mit abgespaltener Borangruppe isoliert.

¹H-NMR (CDCl₃): δ = 7.73 (m 1H, Ar), 7.62-7.40 (m, 11H, Ar), 7.21 (m, 1H, Ar), 6.87 (m, 1H, Ar), 5.20 (q, 1H, J = 6.4 Hz, CHOH), 1.7 (s, br, 1H, OH), 1.23 (d, 3H, *J* = 6.4 Hz) ppm.
³¹P-NMR (CDCl₃): δ = 20.2 (s, BH₃->P-C) ppm.

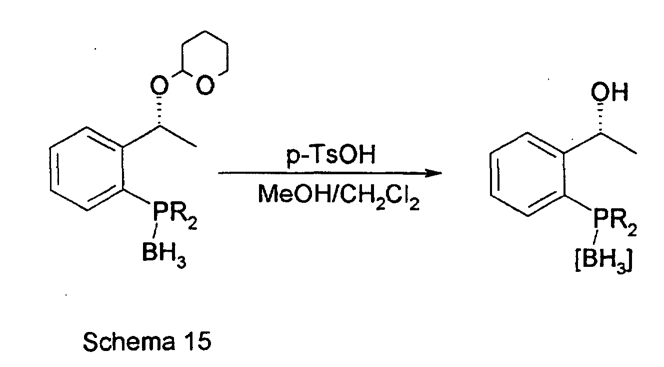

### Beispiel 13: Herstellung von (R)-2-Diphenylphosphino-1-(ethan-1-ol)benzol (Schema 16)

Der Boran-Komplex (15.9 mmol) wird in 31 ml Methanol und 6 ml Dichlormethan gelöst. Zu dieser Lösung werden 0.79 mmol Toluolsulfonsäure gegeben und 24 h unter leichter Erwärmung gerührt, anschließend wird das Lösungsmittel im Vakuum entfernt. Das Rohprodukt wird mittels Flash-Chromatogrphie gereinigt (Ethylacetat /Hexan 2 : 8 -> 3 : 7). Ausbeute: 51 %.

¹H-NMR (CDCl₃): δ = 7.52-7.09 (m 13H, Ar), 6.83 (m, 1H, Ar), 5.57 (m, 1H, CHOH), 1.82 (s, br, 1H), 1.27 (d, 3H, *J* = 6.4 Hz) ppm.
³¹P-NMR (CDCl₃): δ = -15.8 (s) ppm.

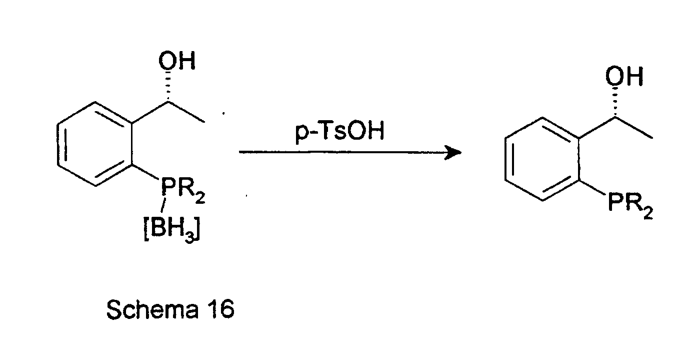

### Beispiel 14: Herstellung von (R)-2-Diphenylphosphino-1-(O-diisopropylphosphinoethan-1-ol)benzol (Schema 17)

Eine Lösung von 2-Diphenylphosphino-1-(ethan-1-ol)benzol (3.6 mmol) in 5 ml THF wird auf 0 °C gekühlt und mit 4.2 mmol Triethylamin versetzt. Nachfolgend werden 4.2 mmol Chlordiisopropylphosphin über 5 min per Spritze zugegeben. Die Reaktionslösung wird bei 0 °C für zwei Stunden und anschließend weitere zwei Stunden bei Raumtemperatur gerührt. Die Lösung wird im Vakuum konzentriert und anschließend mit 3 ml Pentan und 5 ml Diethylether versetzt und über ALOX (neutral) filtriert (Laufmittel Ether / Pentan 3 : 2). Nach dem Entfernen des Lösungsmittels wird das Produkt als hellgelbes Öl erhalten.
³¹P-NMR(CDCl₃): δ = 134.0 (s, P-O), -16.1 (s, P-C) ppm.

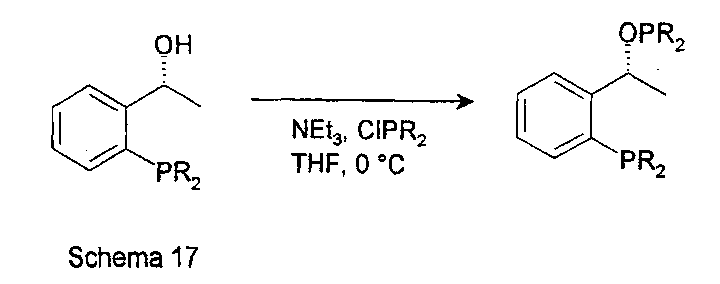

### Beispiel 15: Herstellung von (R)-1-[(S)-2-(Diphenylphosphino)ferrocenyl](Odiphenylphosphinoethanol)

Die Herstellung von (R)-1-[(S)-2-(Diphenylphosphino)ferrocenyl]ethanol erfolgte nach Hayashi et al. Bull. Chem. soc. Jpn. 1980, 53, 1138.
60 mg (0.14 mmol) (R)-1-[(S)-2-(Diphenylphosphino)ferrocenyl]ethanol werden analog zu Beispiel 14 mit Chlordiphenylphosphin in THF, jedoch in Gegenwart von Pyridin als Base umgesetzt. Das Rohprodukt der Reaktion zeigt die Umsetzung zum gewünschten Produkt.

³¹P-NMR(CDCl₃): δ = 98.4 (s, P-O), -21.2 (s, P-C) ppm.

### Erfindungsgemäße Metallkomplexe

### Allgemeine Darstellung der Metallkomplexe

0.11 mmol Metallsalz werden in 4 ml Dichlormethan gelöst. Zu dieser Lösung werden 0.11 mmol des Liganden (gelöst in 1 ml Dichlormethan) gegeben und die Lösung 30 min gerührt. Aus der klaren orangen Lösung wird der Komplex durch Zugabe von Pentan gefällt.

### Beispiel 16: κ²P,P'-{[(R)-2-Diphenylphosphino-1-(O-diphenylphosphinyl-ethan-1-ol)-benzol]cycloocatadienylrhodium}triflat (Schema 18)

Ausbeute: 94 %

³¹P-NMR (CD₂Cl₂): δ = 125.4 (dd, *J*_{*RhP*} *=* 165.1 Hz, *JP*_{*PP*} = 35.2 Hz), 17.5 (dd, *J*_{*RhP*} *=* 145.8 Hz, *J*_{*PP*} *=* 35.2 Hz) ppm.

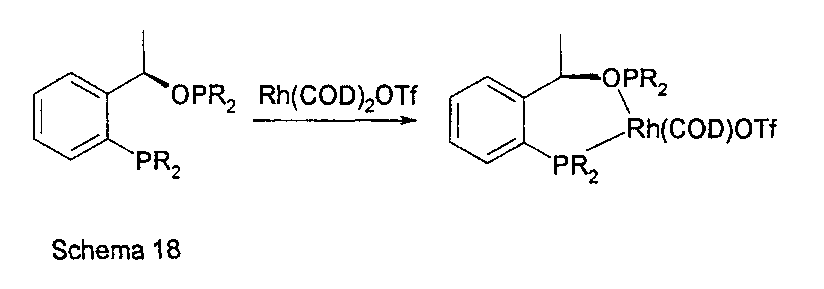

### Beispiel 17: κ²P,P'-((R)-2-Diphenylphosphino-phenyl-O-diphenylphosphinyl-ethan-1-ol)dichloropalladium (Schema 19)

Ausbeute: 91 %

³¹P-NMR (CD₂Cl₂): δ = 117.4 (s, P-O), 19.1 (s, P-C) ppm.

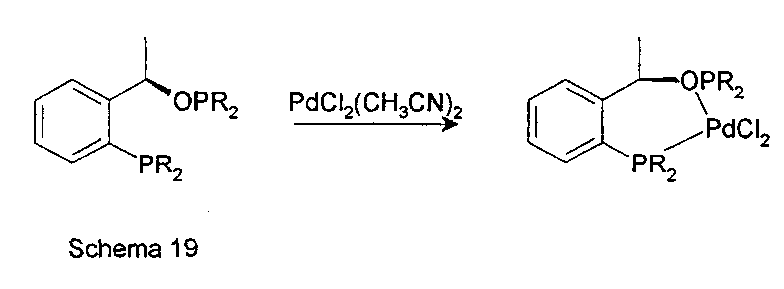

### Beispiel 18: κ²P,P'-{[(R)-2,5-Dimethyl-4-diphenylphosphino-3-(O-diphenyl phosphinyl-ethan-1ol)thiophen]cycloocatadienylrhodium}triflat (Schema 20)

Ausbeute: 93 %

³¹P-NMR (CD₂Cl₂): δ = 120.5 (dd, *J*_{*RhP*} = 160 Hz, *J*_{*PP*} *=* 31 Hz), 6.6 (dd, *J*_{*RhP*} = 141 Hz, *J*_{*PP*} *=* 31 Hz) ppm.

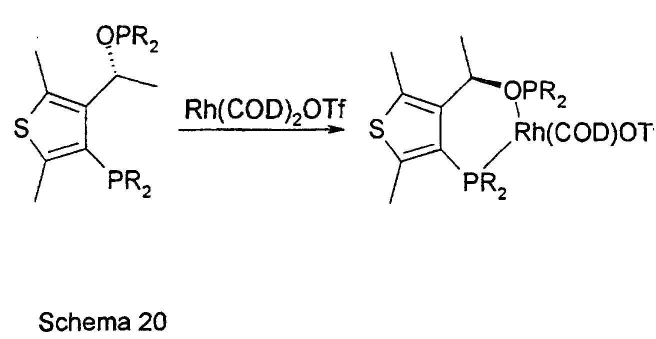

### Beispiel 19: κ²P,P'-[(R)-2,5-Dimethyl-4-diphenylphosphino-3-(O-diphenylphosphinylethan-1ol)thiophen]dichloropalladium (Schema 21)

Ausbeute: 96 %

³¹P-NMR (CD₂Cl₂): δ = 116.8 (s), 18.8 (s) ppm.

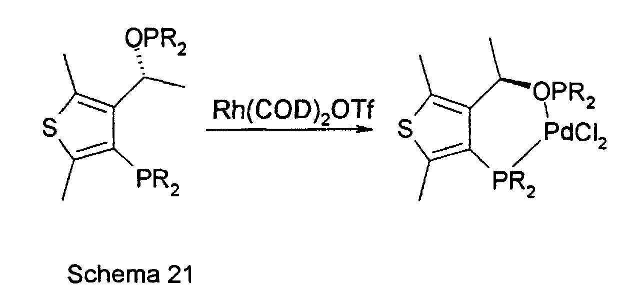

## Patentansprüche

1. Bidentate Organophosphorliganden der allgemeinen Formel I,
R¹R²PZC*HR³XP(YR⁴)(YR⁵) (I)
worin
R¹-R⁵ gleich oder verschieden sind und ein Wasserstoffatom oder eine C₁-C₅₀ kohlenstoffhaltige Gruppe, wie z. B. C₁-C₂₄ Alkyl, C₂-C₂₄ Alkenyl, C₃-C₈ Cycloalkyl, C₃-C₈ Cycloalkenyl, C₆-C₁₄ Aryl, Phenyl, Naphthyl, Fluorenyl, C₂-C₁₃ Heteroaryl, wobei die Zahl der Heteroatome 1-4 betragen kann,
und bei denen die genannten Gruppen jeweils ein- oder mehrfach substituiert sein können, diese Substituenten können dabei unabhängig voneinander Wasserstoff, C₁-C₂₀ Alkyl, C₂-C₂₀ Alkenyl, C₁-C₁₀ Haloalkyl, C₃-C₈ Cycloalkyl, C₃-C₈ Cycloalkenyl, C₂-C₉ Heteroalkyl, C₁-C₉ Heteroalkenyl, C₆-C₁₄ Aryl, Phenyl, Naphthyl, Fluorenyl, C₂-C₇ Heteroaryl, wobei die Zahl der Heteroatome 1-4 betragen kann, C₁-C₁₀ Alkoxy, C₁-C₉ Trihalomethylalkyl, Trifluormethyl, Trichlormethyl, Fluoro, Chloro, Bromo, lodo, Nitro, Hydroxy, Trifluormethylsulfonato, Oxo, Thio, Thiolato, Amino, C₁-C₈ substituierte Amino der Formen mono-, di-, tri- C₁-C₈-Alkylamino oder C₂-C₈ Alkenylamino oder mono-, di-, tri- C₆-C₈ Arylamino oder C₁-C₈-Alkyl-C₆-C₈-arylamino, Cyano, Carboxyl, Carboxylato der Form COOR⁸ wobei R⁸ ein einwertiges Kation oder ein C₁-C₈ Alkyl darstellt, C₁-C₈-Acyloxy, Sulfinato, Sulfonato der Form SO₃R⁸, Phosphato der Form PO₃H₂, PO₃HR⁸, PO₃ R⁸₂, Tri- C₁-C₆ Alkylsilyl, sein,
wobei zwei dieser Substituenten auch verbrückt sein können,
und worin R¹ und R² bzw. R⁴ und R⁵ so miteinander verbrückt sein können, daß eine 4-8 gliedrige cyclische Verbindung vorliegt,
X O, S oder NR⁶
R⁶ einem der für R¹-R⁵ definierten Reste entspricht
Y eine direkte Phosphor-Kohlenstoffbindung, -O-, oder -NR⁷- darstellt, wobei
R⁷ einem der für R¹-R⁵ definierten Reste entspricht,
Z miteinander durch Einfach-oder Doppelbindung verbundene ein bis sechs Kohlenstoffatome sind, die die Phosphineinheit PR¹R² mit dem Kohlenstoffzentrum C* verknüpfen, wobei Z Teil eines gegebenenfalls Heteroatome enthaltenden aliphatischen, cycloaliphatischen, olefinischen, cycloolefinischen Systems, eines Metallocens, das mit Substituenten wie für R¹-R⁵ angegeben oder direkt mit C₁-C₁₀-Alkoxy, C₁-C₉-Trihalomethylalkyl, Trifluormethyl, Trichlormethyl, Fluoro, Chloro, Bromo, lodo, Nitro, Hydroxy, Trifluormethylsulfonato, Oxo, Thio, Thiolato, Amino, C₁-C₈-substituierte Amino der Formen NH₂, NH-Alkyl-C₁-C₈, NH-Aryl-C₅-C₆, N-Alkyl₂-C₁-C₈, N-Aryl₂-C₅-C₆, N-Alkyl₃-C₁-C₈⁺, N-Aryl₃-C₅-C₆⁺, Cyano, Carboxylato der Formen COOH und COO R⁸ wobei R⁸ entweder ein einwertiges Kation oder C₁-C₈-Alkyl darstellt, C₁-C₆-Acyloxy, Sulfinato, Sulfonato der Formen SO₃H und SO₃ R⁸ wobei R⁸ entweder ein einwertiges Kation, C₁-C₈-Alkyl oder C₆-Aryl darstellt, Phosphonato, Phosphato der Formen PO₃H₂, PO₃HR⁸ und PO₃ R⁸₂ wobei R⁸ entweder ein einwertiges Kation, C₁-C₈-Alkyl oder C₆-Aryl darstellt, C₁-C₆-Trialkylsilyl, CONH₂, NHCO-Alkyl-(C₁-C₄), CON(Alkyl-(C₁-C₈))₂, CO-Alkyl-(C₁-C₈), COO-Alkyl-(C₁-C₈), CO-Alkenyl-(C₁-C₈), NHCOO-Alkyl-(C₁-C₄), CO-Aryl-(C₆-C₁₀), COO-Aryl-(C₆-C₁₀), CHCH-COO-Alkyl-(C₁-C₈), CHCHCOOH ein oder mehrfach substituiert sein kann und
P ein dreiwertiger Phosphor ist.

2. Verbindungen nach Anspruch 1 **dadurch gekennzeichnet, daß** R¹-R⁵ unabhängig voneinander für eine bis zu 20 Kohlenstoffatome enthaltende Alkyl-, Alkenyl-, Haloalkyl-, Cycloalkyl-, Cycloalkenyl-, Aryl-, Heteroarylgruppe steht, die ein oder mehrfach mit C₁-C₂₀ Alkyl, C₂-C₂₀ Alkenyl, C₁-C₁₀ Haloalkyl, C₃-C₈ Cycloalkyl, C₃-C₈ Cycloalkenyl, C₆-C₁₄ Aryl, C₂-C₇ Heteroaryl, C₁-C₁₀ Alkoxy, Halogeno, Nitro, Hydroxy, Oxo, Thio, Thiolato, Amino, substituierte Amino, Cyano, Sulfonato, Tri- C₁-C₆ Alkylsilyl substituiert sein können.

3. Verbindung nach Anspruch 1 oder 2, **dadurch gekennzeichnet, daß** Z Teil eines drei- bis neungliedrigen, bevorzugt eines fünf- bis siebengliedrigen, Ringsystem ist.

4. Verbindungen nach Anspruch 3, **dadurch gekennzeichnet, daß** das Ringsystem ein Aromat oder Heteroaromat ist.

5. Verbindungen nach Anspruch 4, **dadurch gekennzeichnet, daß** der Aromat ein 1,1'oder ein 1,2-substituiertes Metallocen ist.

6. Verbindungen nach Anspruch 5, **dadurch gekennzeichnet, daß** das Metallocen Ferrocen ist.

7. Verbindung nach einem der vorherigen Ansprüche, **dadurch gekennzeichnet, daß** das Ringsystem Z ein bis vier Heteroatome enthält.

8. Verbindung nach einem der vorherigen Ansprüche, **dadurch gekennzeichnet, daß** das Ringsystem Z ein bis zwei Heteroatome enthält.

9. Verbindung nach Anspruch 3, **dadurch gekennzeichnet, daß** die Ringsysteme unsubstituierte oder nach Anspruch 1 substituierte Phenyl, Cyclopentyl, Cyclohexyl, Pyridyl, Pyrrol, Furyl, Thiophen, Tetrahydrofuran, Tetrahydrothiophen, Piperidyl, Pyrrolidinyl, Dioxolan, Ferrocenyl, Sulfolan, darstellen.

10. Verbindung nach einem der vorherigen Ansprüche, **dadurch gekennzeichnet, daß** die Heteroatome O, N oder S sind.

11. Verbindung nach einem der vorhergehenden Ansprüche, **dadurch gekennzeichnet, daß** R3 Methyl oder Ethyl oder Isopropyl ist.

12. Verbindung nach Anspruch 1, **dadurch gekennzeichnet, daß** die Alkyl-, Alkenyl-, Haloalkyl-, Cycloalkyl, Cycloalkenyl, Alkoxy, Trialkylsilyl, oder/und Dialkylaminogruppen in R¹-R⁷ unabhängig voneinander jeweils 1 bis 20, insbesondere 1 bis 6 Kohlenstoffatome enthalten.

13. Verbindung nach Anspruch 1, **dadurch gekennzeichnet, daß** die Haloalkylgruppen in R¹-R⁷ CF₃, CH₂CF₃, C₂F₅ sind.

14. Verbindung nach Anspruch 1, **dadurch gekennzeichnet, daß** R¹ R², R⁴ und R⁵ Arylsubstituenten sind.

15. Verbindung nach Anspruch 14, **dadurch gekennzeichnet, daß** die Arylsubstituenten 2-Alkylphenyl, 3-Alkylphenyl, 4-Alkylphenyl, 2,6-Dialkylphenyl, 3,5-Dialkylphenyl, 3,4,5-Trialkylphenyl, 2-Alkoxyphenyl, 3-Alkoxyphenyl, 4-Alkoxyphenyl, 2,6-Dialkoxylphenyl, 3,5-Dialkoxyphenyl, 3,4,5-Trialkoxyphenyl, 3,5-Dialkyl-4-Alkoxyphenyl, 3,5-Dialkyl-4-dialkylaminophenyl, 4-Dialkylamino, 3,5-Trifluormethyl, 4-Trifluormethyl, 2-Sulfonyl, 3-Sulfonyl, 4-Sulfonyl, ein bis vierfach halogenierte Phenyl, Naphtyl sind.

16. Verbindung nach Anspruch 1, **dadurch gekennzeichnet, daß** R¹ R², R⁴ und R⁵ Alkylsubstituenten oder Cycloalkylsubstituenten sind.

17. Verbindung nach Anspruch 16, **dadurch gekennzeichnet, daß** die Alkylsubstituenten Methyl, Ethyl, n-Propyl, 1-Methylethyl, n-Butyl, 1-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, n-Heptyl, n-Octyl, n-Nonyl, n-Decyl sind.

18. Verbindung nach Anspruch 16, **dadurch gekennzeichnet, daß** die cyclischen Alkylsubstituenten substituierte und unsubstituierte Cyclopentyl, Cyclohexyl, Cycloheptyl sind.

19. Verbindungen nach Anspruch 1, **dadurch gekennzeichnet, daß** X NR⁶ oder O ist.

20. Verbindungen nach Anspruch 1, **dadurch gekennzeichnet, daß** Y NR⁷, O oder eine direkte Phosphor-Kohlenstoffbindung ist.

21. Verbindungen nach Anspruch 1, **dadurch gekennzeichnet, daß** die Verbindungen der Formel I optisch aktiv sind.

22. Verbindungen nach Anspruch 1, **dadurch gekennzeichnet, daß** die Verbindungen der Formel I enantiomerenangereichert sind.

23. Verbindungen nach Anspruch 22, **dadurch gekennzeichnet, daß** die Enantiomerenanreicherung 90 %, bevorzugt 99 % übersteigt.

24. Komplexverbindung, die Verbindungen nach Anspruch 1 als Ligand mit mindestens einem Übergangsmetall enthält.

25. Komplexverbindungen gemäß Anspruch 24 der Formel (XVIII),
[MₓPₘLₙS_{q}]Aᵣ (XVIII)
wobei
M ein Metallzentrum,
L gleiche oder verschiedene koordinierende organische oder anorganische Liganden und
P erfindungsgemäße bidentate Organophosphorliganden der Formel (I) darstellen,
S koordinierende Lösungsmittelmoleküle sind und
A Äquivalente aus nicht koordinierenden Anionen repräsentieren,
wobei x und m ganzen Zahlen größer oder gleich 1, n, q und r ganzen Zahlen größer oder gleich 0 sind V.

26. Komplexverbindungen gemäß Anspruch 25 **dadurch gekennzeichnet, daß** die Summe m + n + q kleiner oder gleich 6x ist.

27. Komplexverbindungen gemäß einem der Ansprüche 24 bis 26 **dadurch gekennzeichnet, daß** der Komplex ein bis vier Metallzentren, bevorzugt ein oder zwei Metallzentren besitzt.

28. Komplexverbindungen gemäß einem der Ansprüche 24 bis 27 **dadurch gekennzeichnet, daß** die Komplexverbindungen mindestens ein Metallzentrum oder die Metallzentren Mₓ mindestens ein Übergangsmetallatom oder -ion, insbesondere Palladium, Platin, Rhodium, Ruthenium, Osmium, Iridium, Kobalt, Nickel, oder/und Kupfer enthalten.

29. Verwendung einer Komplexverbindung nach den Ansprüchen 24 bis 28 als Katalysator für asymmetrische Reaktionen oder Polymerisationen.

30. Verwendung einer Komplexverbindung nach den Ansprüchen 24 bis 28 als Katalysator für asymmetrische Hydrierung, Hydroformylierung, Umlagerung, allylischen Alkylierung, Cyclopropanierung, Hydrosilylierung, Hydridübertragungsreaktionen, Hydroborierungen, Hydrocyanierungen, Hydrocarboxylierungen, Aldol Reaktionen oder Heck-Reaktion.

31. Verwendung einer Komplexverbindung nach den Ansprüchen 24 bis 28 als Katalysator für die asymmetrische Hydrierung und/oder Hydroformylierung.

## Claims

1. Bidentate organophosphorus ligands having the general formula I,
R¹R²PZC*HR³XP(YR⁴)(YR⁵) I
wherein
R¹-R⁵ are the same or different and are a hydrogen atom or a C₁-C₅₀ carbon-containing group, such as e.g. C₁-C₂₄ alkyl, C₂-C₂₄ alkenyl, C₃-C₈ cycloalkyl, C₃-C₈ cycloalkenyl, C₆-C₁₄ aryl, phenyl, naphthyl, fluorenyl, C₂-C₁₃ heteroaryl, whereby the number of heteroatoms can be 1 to 4,
and in which the cited groups can each be monosubstituted or polysubstituted, whereby these substituents can mutually independently be hydrogen, C₁-C₂₀ alkyl, C₂-C₂₀ alkenyl, C₁-C₁₀ haloalkyl, C₃-C₈ cycloalkyl, C₃-C₈ cycloalkenyl, C₂-C₉ heteroalkyl, C₁-C₉ heteroalkenyl, C₆-C₁₄ aryl, phenyl, naphthyl, fluorenyl, C₂-C₇ heteroaryl, whereby the number of heteroatoms can be 1 to 4, C₁-C₁₀ alkoxy, C₁-C₉ trihalomethyl alkyl, trifluoromethyl, trichloromethyl, fluoro, chloro, bromo, iodo, nitro, hydroxy, trifluoromethyl sulfonato, oxo, thio, thiolato, amino, C₁-C₈ substituted amino in the forms mono-, di-, tri-C₁-C₈ alkyl amino or C₂-C₈ alkenyl amino or mono-, di-, tri-C₆-C₈ aryl amino or C₁-C₈ alkyl C₆-C₈ aryl amino, cyano, carboxyl, carboxylato in the form COOR⁸, whereby R⁸ represents a monovalent cation or a C₁-C₈ alkyl, C₁-C₈ acyloxy, sulfinato, sulfonato in the form SO₃R⁸, phosphato in the form PO₃H₂, PO₃HR⁸, PO₃R⁸₂, tri-C₁-C₆ alkyl silyl,
whereby these two substituents can also be bridged, and wherein R¹ and R² or R⁴ and R⁵ can be bridged together in such a way that a four- to eight-membered cyclic compound is present,
X corresponds to O, S or NR⁶
R⁶ corresponds to one of the radicals defined for R¹ to R₅
Y represents a direct phosphorus-carbon bond, -O- or -NR⁷-, whereby
R⁷ corresponds to one of the radicals defined for R¹ to R₅
Z are one to six carbon atoms that are linked by single or double bonds and that link the phosphine unit PR¹R² with the carbon centre C*, whereby Z is part of an aliphatic, cycloaliphatic, olefinic
cycloolefinic system optionally containing heteroatoms, a metallocene, which can be monosubstituted or polysubstituted with substituents as cited for R¹-R⁵ or directly with C₁-C₁₀ alkoxy, C₁-C₉ trihalomethyl alkyl, trifluoromethyl, trichloromethyl, fluoro, chloro, bromo, iodo, nitro, hydroxy, trifluoromethyl sulfonato, oxo, thio, thiolato, amino, C₁-C₈ substituted amino in the forms NH₂, NH alkyl C₁-C₈, NH aryl C₅-C₆, N-alkyl₂ C₁-C₈, N-aryl₂ C₅-C₆, N-alkyl₃ C₁-C₈⁺, N-aryl₃ C₅-C₆⁺, cyano, carboxylato in the forms COOH and COOR⁸, whereby R⁸ represents either a monovalent cation or C₁-C₈ alkyl, C₁-C₆ acyloxy, sulfinato, sulfonato in the forms SO₃H and SO₃R⁸ whereby R⁸ represents either a monovalent cation, C₁-C₈ alkyl or C₆ aryl, phosphonato, phosphato in the forms PO₃H₂, PO₃HR⁸ and PO₃R⁸₂, whereby R⁸ represents either a monovalent cation, C₁-C₈ alkyl or C₆ aryl, C₁-C₆ trialkyl silyl, CONH₂, NHCO alkyl (C₁-C₄), CON (alkyl (C₁-C₈))₂, CO alkyl (C₁-C₈), COO alkyl (C₁-C₈), CO alkenyl (C₁-C₈), NHCOO alkyl (C₁-C₄), CO aryl (C₆-C₁₀), COO aryl (C₆-C₁₀), CHCH-COO alkyl (C₁-C₈), CHCHCOOH and
P is a trivalent phosphorus.

2. Compounds according to claim 1, **characterised in that** R¹-R⁵ mutually independently stand for an alkyl, alkenyl, haloalkyl, cycloalkyl, cycloalkenyl, aryl, heteroaryl group containing up to 20 carbon atoms, which can be monosubstituted or polysubstituted with C₁-C₂₀ alkyl, C₂-C₂₀ alkenyl, C₁-C₁₀ haloalkyl, C₃-C₈ cycloalkyl, C₃-C₈ cycloalkenyl, C₆-C₁₄ aryl, C₂-C₇ heteroaryl, C₁-C₁₀ alkoxy, halogeno, nitro, hydroxy, oxo, thio, thiolato, amino, substituted amino, cyano, sulfonato, tri-C₁-C₆ alkyl silyl.

3. Compound according to claim 1 or 2, **characterised in that** Z is part of a three- to nine-membered, preferably a five- to seven-membered ring system.

4. Compounds according to claim 3, **characterised in that** the ring system is an aromatic or heteroaromatic.

5. Compounds according to claim 4, **characterised in that** the aromatic is a 1,1- or 1,2-substituted metallocene.

6. Compounds according to claim 5, **characterised in that** the metallocene is ferrocene.

7. Compound according to one of the preceding claims, **characterised in that** the ring system Z contains one to four heteroatoms.

8. Compound according to one of the preceding claims, **characterised in that** the ring system Z contains one to two heteroatoms.

9. Compound according to claim 3, **characterised in that** the ring systems represent phenyl, cyclopentyl, cyclohexyl, pyridyl, pyrrole, furyl, thiophene, tetrahydrofuran, tetrahydrothiophene, piperidyl, pyrrolidinyl, dioxolane, ferrocenyl, sulfolane, either unsubstituted or substituted according to claim 1.

10. Compound according to one of the preceding claims, **characterised in that** the heteroatoms are O, N or S.

11. Compound according to one of the preceding claims, **characterised in that** R3 is methyl or ethyl or isopropyl.

12. Compound according to claim 1, **characterised in that** the alkyl, alkenyl, haloalkyl, cycloalkyl, cycloalkenyl, alkoxy, trialkyl silyl or/and dialkyl amino groups in R¹-R⁷ each mutually independently contain 1 to 20, in particular 1 to 6 carbon atoms.

13. Compound according to claim 1, **characterised in that** the haloalkyl groups in R¹-R⁷ are CF₃, CH₂CF₃, C₂F₅.

14. Compound according to claim 1, **characterised in that** R¹ R², R⁴ and R⁵ are aryl substituents.

15. Compound according to claim 14, **characterised in that** the aryl substituents are 2-alkyl phenyl, 3-alkyl phenyl, 4-alkyl phenyl, 2,6-dialkyl phenyl, 3,5-dialkyl phenyl, 3,4,5-trialkyl phenyl, 2-alkoxy phenyl, 3-alkoxy phenyl, 4-alkoxy phenyl, 2,6-dialkoxyl phenyl, 3,5-dialkoxy phenyl, 3,4,5-trialkoxy phenyl, 3,5-dialkyl-4-alkoxy phenyl, 3,5-dialkyl-4-dialkyl aminophenyl, 4-dialkyl amino, 3,5-trifluoromethyl, 4-trifluoromethyl, 2-sulfonyl, 3-sulfonyl, 4-sulfonyl, monohalogenated to tetrahalogenated phenyl, naphtyl [sic].

16. Compound according to claim 1, **characterised in that** R¹ R², R⁴ and R⁵ are alkyl substituents or cycloalkyl substituents.

17. Compound according to claim 16, **characterised in that** the alkyl substituents are methyl, ethyl, n-propyl, 1-methyl ethyl, n-butyl, 1-methyl propyl, 1,1-dimethyl ethyl, n-pentyl, 1-methyl butyl, 2-methyl butyl, 3-methyl butyl, 2,2-dimethyl propyl, 1-ethyl propyl, n-hexyl, 1,1-dimethyl propyl, 1,2-dimethyl propyl, 1-methyl pentyl, 2-methyl pentyl, 3-methyl pentyl, 4-methyl pentyl, 1,1-dimethyl butyl, 1,2-dimethyl butyl, 1,3-dimethyl butyl, 2,2-dimethyl butyl, 2,3-dimethyl butyl, 3,3-dimethyl butyl, 1-ethyl butyl, 2-ethyl butyl, 1,1,2-trimethyl propyl, 1,2,2-trimethyl propyl, 1-ethyl-1-methyl propyl, n-heptyl, n-octyl, n-nonyl, n-decyl.

18. Compound according to claim 16, **characterised in that** the cyclic alkyl substituents are substituted and unsubstituted cyclopentyl, cyclohexyl, cycloheptyl.

19. Compounds according to claim 1, **characterised in that** X is NR⁶ or O.

20. Compounds according to claim 1, **characterised in that** Y is NR⁷, O or a direct phosphorus-carbon bond.

21. Compounds according to claim 1, **characterised in that** the compounds having formula I are optically active.

22. Compounds according to claim 1, **characterised in that** the compounds having formula I are enantiomer concentrated.

23. Compounds according to claim 22, **characterised in that** the enantiomer concentration exceeds 90 %, preferably 99 %.

24. Complex compound containing compounds according to claim 1 as ligand with at least one transition metal.

25. Complex compounds according to claim 24 having the formula (XVIII),
[MₓPₘLₙS_{q}]Aᵣ (XVIII)
whereby
M represents a metal centre,
L represents the same or different coordinating organic or inorganic ligands and
P represents bidentate organophosphorus ligands according to the invention having formula (I),
S are coordinating solvent molecules and
A represent equivalents of uncoordinating anions,
whereby x and m are whole numbers greater than or equal to 1, n, q and r are whole numbers greater than or equal to 0.

26. Complex compounds according to claim 25, **characterised in that** the sum of m + n + q is less than or equal to 6x.

27. Complex compounds according to one of claims 24 to 26, **characterised in that** the complex has one to four metal centres, preferably one or two metal centres.

28. Complex compounds according to one of claims 24 to 27, **characterised in that** the complex compounds contain at least one metal centre or the metal centres Mₓ contain at least one transition metal atom or ion, in particular palladium, platinum, rhodium, ruthenium, osmium, iridium, cobalt, nickel, or/and copper.

29. Use of a complex compound according to claims 24 to 28 as a catalyst for asymmetrical reactions or polymerisation.

30. Use of a complex compound according to claims 24 to 28 as a catalyst for asymmetrical hydrogenation, hydroformylation, rearrangement, allylic alkylation, cyclopropanation, hydrosilylation, hydride transfer reactions, hydroborations, hydrocyanations, hydrocarboxylations, aldol reactions or Heck reaction.

31. Use of a complex compound according to claims 24 to 28 as a catalyst for asymmetrical hydrogenation and/or hydroformylation.

## Revendications

1. Ligands organophosphorés bidentés de formule générale I,
R¹R²PZC*HR³XP(YR)⁴(YR⁵) (I)
dans laquelle
R¹-R⁵ sont identiques ou différents et représentent un atome d'hydrogène ou un groupe carboné en C₁ à C₅₀, comme par exemple un alkyle en C₁ à C₂₄, un alcényle en C₂ à C₂₄, un cycloalkyle en C₃ à C₈, un cycloalcényle en C₃ à C₈, un aryle en C₆ à C₁₄, un phényle, un naphtyle, un fluroényle, un hétéroaryle en C₂ à C₁₃, où le nombre d'héréoatomes peut aller de 1 à 4,
et où les groupes mentionnés peuvent toujours être mono- ou polysubstitués, ces substituants pouvant représenter indépendamment l'un de l'autre un hydrogène, un alkyle en C₁ à C₂₀, un alcényle en C₂ à C₂₀, un haloalkyle en C₁ à C₁₀, cycloalkyle en C₃ à C₈, un cycloalcényle en C₃ à C₈, un hétéroalkyle en C₂ à C₉, un hétéroalcényle en C₁ à C₉, un aryle en C₆ à C₁₄, un phényle, un naphtyle, un fluroényle, un hétéroaryle en C₂ à C₇, où le nombre des hétéroatomes peut aller de 1 à 4, un alcoxy en C₁ à C₁₀, un trihalométhyl alkyle en C₁ à C₉, un tri-fluorométhyle, un trichlorométhyle, un fluoro, un chloro, un bromo, un iodo, un nitro, un hydroxy, un trifluorométhyl sulfonato, un oxo, un thio, un thiolato, un amino, un amino substitué en C₁ à C₈ de forme mono-, di-, tri-alkylamino en C₁ à C₈ ou alcénylamino en C₂ à C₈ ou un mono-, di-, tri-arylammo en C₆ à C₈ ou un alkyle en C₁ à C₈-arylamino en C₆ à C₈, un cyano, un carboxyle, un carboxylato de forme COOR⁸, où R⁸ représente un cation monovalent monoalkyle en C₁ à C₈, un acyloxy en C₁ à C₈, un sulfinato, un sulfonato de formule SO₃R⁸, un phosphato de formule PO₃H₂, PO₃HR⁸, PO₃R⁸₂, un tri-alkyle en C₁ à C₆-silyle,
où deux de ces substituants peuvent également être pontés,
et où R¹ et R² ou selon les cas R⁴ et R⁵ peuvent être pontés l'un à l'autre de manière que l'on ait un composé cyclique à 4 à 8 chaînons,
X représente O, S ou NR⁶,
R⁶ correspond à l'un des radicaux définis pour R¹-R⁵
Y représente une liaison phosphore-carbone directe, -O- ou -NR⁷-, où
R⁷ correspond à l'un des radicaux définis pour R¹-R⁵,
Z représente de 1 à 6 atomes de carbone reliés entre eux par des liaisons simples ou doubles, qui relient l'unité phosphine PR¹R² avec le centre carboné C*, Z étant une partie d'un système aliphatique, cycloaliphatique, oléfinique, cyclooléfinique contenant le cas échéant des hétéroatomes, d'un métallocène, qui contient des substituants tels qu'indiqués pour R¹-R⁵ ou qui est directement substitué par un alcoxy en C₁ à C₁₀, un trihalométhyl alkyle en C₁ à C₉, un trifluorométhyle, un trichlorométhyle, un fluoro, un chloro, un bromo, un iodo, un nitro, un hydroxy, un trifluorométhyl sulfonato, un oxo, un thio, un thiolato, un amino, un amino substitué en C₁ à C₈ de forme NH₂, NH-alkyle en C₁ à C₈, NH-aryle en C₅ à C₆, N-alkyle₂ en C₁ à C₈, N-aryle₂ en C₅ à C₆, N-alkyle₃ en Ci à C₈⁺, N-aryle₃ en C₅ à C₆⁺, un cyano, un carboxylato de forme COOH et COOR⁸ où R⁸ repérsente soit un cation monovalent, soit un alkyle en C₁ à C₈, un acyloxy en C₁ à C₆, un sulfinato, un sulfonato de formes SO₃H et SO₃R⁸, où R⁸ représente soit un cation monovalent, soit un alkyle en C₁ à C₈, soit un aryle en C₆, un phosphonato, un phosphato de formes PO₃H₂, PO₃HR⁸, et PO₃R⁸₂, où R⁸ représente soit un cation monovalent, soit un alkyle en C₁ à C₈ ou un aryle en C₆, un tri-alkyle en C₁ à C₆-silyle, CONH₂, NHCO-alkyle en C₁ à C₄, CON(alkyle en C₁ à C₈)₂,CO-alkyle en C₁ à C₈, COO-alkyl-(C₁-C₈), CO-alcényl (C₁-C₈), NHCOO-alkyl-(C₁-C₄), CO-aryl (C₆-C₁₀), COO-aryl(C₆-C₁₀), CHCH-COO-alkyl(C₁-C₈), CHCHCOOH, mono- ou polysubstitués et
P est un phosphore trivalent.

2. Composés selon la revendication 1,
**caractérisés en ce que**
R¹ à R⁵ représentent indépendamment l'un de l'autre un groupe alkyle, alcényle, haloalkyle, cycloalkyle, cycloalcényle, aryle, hétéroaryle contenant jusqu'à 20 atomes de carbone, qui peut être mono- ou polysubstitué par un alkyle en C₁ à C₂₀, un alcényle en C₂ à C₂₀, un haloalkyle en C₁ à C₁₀, un cycloalkyle en C₃ à C₈, un cycloalcényle en C₃ à C₈, un aryle en C₆ à C₁₄, un hétéroaryle en C₂ à C₇, un alcoxy en C₁ à C₁₀, un halogéno, un nitro, un hydroxy, un oxo, un thio, un thiolato, un amino, un amino susbtitué, un cyano, un sulfonato, un tri-alkyl silyle en C₁ à C₆.

3. Composé selon la revendication 1 ou 2,
**caractérisé en ce que**
Z est une partie d'un système cyclique à 3 à 9 chaînons, de préférence d'un système cyclique à 5 à 7 chaînons.

4. Composés selon la revendication 3,
**caractérisés en ce que**
le système cyclique est un composé aromatique ou hétéroaromatique.

5. Composés selon la revendication 4,
**caractérisés en ce que**
le composé aromatique est un métallocène à substitution 1,1' ou substitution 1,2.

6. Composés selon la revendication 5,
**caractérisés en ce que**
le métallocène est un ferrocène.

7. Composés selon l'une des revendications précédentes,
**caractérisés en ce que**
le système cyclique Z contient de 1 à 4 hétéroatomes.

8. Composés de l'une des revendications précédentes,
**caractérisés en ce que**
le système cyclique Z contient de 1 à 2 hétéroatomes.

9. Composés selon la revendication 3,
**caractérisés en ce que**
les systèmes cycliques représentent des radicaux phényle, cyclopentyle, cyclohexyle, pyridyle, pyrrole, furyle, thiophène, tétrahydrofuranne, tétrahydrothiophène, pipéridyle, pyrrolidinyle, dioxolanne, ferrocényle ou sulfolane non substitués ou substitués selon la revendication 1.

10. Composé de l'une des revendication précédentes,
**caractérisé en ce que**
les hétéroatomes sont O, N ou S.

11. Composé selon l'une des revendications précédentes,
**caractérisé en ce que**
R³ est un méthyle ou éthyle ou un isopropyle.

12. Composé selon la revendication 1,
**caractérisé en ce que**
les groupes alkyle, alcényle, haloalkyle, cycloalkyle, cycloalcényle, alcoxy, trialkylsilyle et/ou dialkylamino dans R¹ à R⁷ contiennent à chaque fois indépendamment l'un de l'autre de 1 à 20, en particulier de 1 à 6 atomes de carbone.

13. Composé selon la revendication 1,
**caractérisé en ce que**
les groupes haloalkyle dans R¹ à R⁷ représentent CF₃, CH₂CF₃, C₂F₅.

14. Composé selon la revendication 1,
**caractérisé en ce que**
R¹, R², R⁴ et R⁵ sont des substituants aryle.

15. Composé selon la revendication 14,
**caractérisé en ce que**
les substituants aryle représentent un 2-alkylphényle, 3-aklylphényle, 4-alkylphényle, 2,6-dialkylphényle, 3,5-dialkylphényle, 3,4,5-trialkylphényle, 2-alcoxyphényle, 3-alcoxyphényle, 4-alcoxyphényle, 2,6-dialcoxyphényle, 3,5-dialcoxyphényle, 3,4,5-trialcoxyphényle, 3,5-dialkyl-4-alcoxyphényle, 3,5-dialkyl-4-dialkylaminophényle, 4-dialkylamino, 3,5-trifluorométhyle, 4-trifluorométhyle, 2-sulfonyle, 3-sulfonyle, 4-sulfonyle, un phényle mono- à tétrahalogéné, un naphtyle.

16. Composé selon la revendication 1,
**caractérisé en ce que**
R¹, R², R⁴ et R⁵ sont des substituants alkyle ou des substituants cycloalkyle.

17. Composé selon la revendication 16,
**caractérisé en ce que**
les substituants alkyle représentent un méthyle, éthyle, n-propyle, 1-méthyléthyle, n-butyle, 1-méthylpropyle, 1,1-diméthyléthyle, n-pentyle, 1-méthylbutyle, 2-méthylbutyle, 3-méthylbutyle, 2,2-diméthylpropyle, 1-éthylpropyle, n-hexyle, 1,1-diméthylpropyle, 1,2-diméthylpropyle, 1-méthypentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, n-heptyle, n-octyle, n-nonyle, n-décyle.

18. Composé selon la revendication 16,
**caractérisé en ce que**
les substituants alkyle cycliques sont des substituants cyclopentyle, cyclohexyle ou cycloheptyle substitués et non substitués.

19. Composés selon la revendication 1,
**caractérisés en ce que**
X représente un NR⁶ ou O.

20. Composés selon la revendication 1,
**caractérisés en ce que**
Y représente NR⁷, O ou une liaison phosphore-carbone directe.

21. Composés selon la revendication 1,
**caractérisés en ce que**
les composés de formule I sont optiquement actifs.

22. Composés selon la revendication 1,
**caractérisés en ce que**
les composés de formule I sont enrichis en énantiomères.

23. Composés selon la revendication 22,
**caractérisés en ce que**
l'enrichissement en énantiomère dépasse 90 %, de préférence 99 %.

24. Composé complexe qui contient des composés selon la revendication 1 comme ligand avec au moins un métal de transition.

25. Composés complexes selon la revendication 24, de formule (XVIII)
[MₓPₘLₙS_{q}]Aᵣ (XVIII)
dans laquelle
M représente un centre métallique,
L représente des ligands organiques ou inorganiques de coordination identiques ou différents et
P représente des ligands organo phosphorés bidentés selon l'invention de formule (I),
S représente des molécules de solvants de coordination et
A représente des équivalents d'anions non coordonnés, et
x et m sont des nombres entiers supérieurs ou égaux à 1, n, q et r représentent des nombres entiers supérieurs ou égaux à 0.

26. Composés complexes selon la revendication 25,
**caractérisés en ce que**
la somme m+n+q est inférieure ou égale à 6x.

27. Composés complexes selon l'une des revendications 24 à 26,
**caractérisés en ce que**
le complexe possède 1 à 4 centres métalliques, de préférence un ou deux centres métalliques.

28. Composés complexes selon l'une des revendications 24 à 27,
**caractérisés en ce que**
les composés complexes contiennent au moins un centre métallique ou les centres métalliques Mₓ, au moins un atome ou ion de métal de transition, en particulier de palladium, de platine, de rhodium, de ruthénium, d'osmium, d'iridium, de cobalt, de nickel et/ou de cuivre.

29. Utilisation d'un composé complexe selon les revendications 24 à 28 comme catalyseur pour les réactions asymétriques ou les polymérisations.

30. Utilisation d'un composé complexe selon les revendications 24 à 28, comme catalyseur pour l'hydrogénation asymétrique, l'hydroformylation, la transposition, l'alkylation allylique, la cyclopropanation, l'hydrosilylation, les réactions de transfert d'hydrure, les hydroborations, les hydrocyanations, les hydrocarboxylations, les réactions d'aldol ou les réactions de Heck.

31. Utilisation d'un composé complexe selon les revendications 24 à 28, comme catalyseur pour l'hydrogénation asymétrique et/ou l'hydroformylation.
